(19) **Europäisches Patentamt / European Patent Office / Office européen des brevets**

(11) **EP 4 657 563 A1**

(12) ## EUROPEAN PATENT APPLICATION
published in accordance with Art. 153(4) EPC

(43) Date of publication:
**03.12.2025 Bulletin 2025/49**

(21) Application number: **25756107.6**

(22) Date of filing: **15.01.2025**

(51) International Patent Classification (IPC):
**H01M 4/36** (2006.01)   **H01M 4/525** (2010.01)
**H01M 4/505** (2010.01)   **H01M 10/54** (2006.01)
**B09B 3/40** (2022.01)   **B09B 3/35** (2022.01)
**H01M 4/02** (2006.01)   **B09B 101/16** (2022.01)

(52) Cooperative Patent Classification (CPC):
**C01G 53/502; C01G 53/42; C01G 53/50;**
**C01G 53/82; H01M 4/366; H01M 4/505;**
**H01M 4/525; H01M 10/54;** C01P 2002/60;
C01P 2002/70; C01P 2004/84; C01P 2006/40;
H01M 2004/028; Y02W 30/84

(86) International application number:
**PCT/KR2025/000845**

(87) International publication number:
**WO 2025/183361 (04.09.2025 Gazette 2025/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.02.2024  KR 20240029795**
         **13.01.2025  KR 20250004743**

(71) Applicant: **LG Energy Solution, Ltd.**
**Seoul 07335 (KR)**

(72) Inventors:
• **CHOI, Jeong Mi**
  **Daejeon 34122 (KR)**
• **PARK, Se Ho**
  **Daejeon 34122 (KR)**
• **LEE, Jeongbae**
  **Daejeon 34122 (KR)**
• **KIM, Yeon Jun**
  **Daejeon 34122 (KR)**
• **SEO, Yongsik**
  **Daejeon 34122 (KR)**
• **PARK, Gwangseon**
  **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE ACTIVE MATERIAL AND METHOD FOR RECYCLING SAME**

(57)   The present disclosure relates to a positive electrode active material and a recycling method thereof. More specifically, in the positive electrode active material and a recycling method thereof, the positive electrode active material is at least one type selected from a lithium nickel oxide (LNO)-based positive electrode active material, a nickel·cobalt·manganese (NCM)-based positive electrode active material, a nickel·cobalt·aluminum (NCA)-based positive electrode active material and a nickel·cobalt·manganese·aluminum (NCMA)-based positive electrode active material, in which single particles are included, a content of F is 5,700 mg/kg to 6,500 mg/kg, and/or an a-axis lattice parameter measured by an XRD analysis is 2.8753 Å to 2.8772 Å, a c-axis lattice parameter is 14.243 Å to 14.255 Å, a cell volume is 101.968 Å$^3$ to 102.168 Å$^3$ and a crystallite size is greater than 130 nm and equal to or less than 136 nm.

**(Cont. next page)**

EP 4 657 563 A1

# FIG. 2

**Description**

[Technical Field]

[CROSS-REFERENCE TO RELATED APPLICATION(S)]

This application is based on and claims priority from Korean Patent Application No. 10-2024-0029795, filed on February 29, 2024, and Korean Patent Application No. 10-2025-0004743, re-filed on January 13, 2025, which is based thereon, with the Korean Intellectual Property Office, the disclosure of which is incorporated herein in its entirety by reference.

The present invention relates to a positive electrode active material and a recycling method thereof. More specifically, since the single-particle-containing positive electrode active material recovered after heat treatment of a waste positive electrode is not subjected to a pre-washing process and is directly annealed through the addition of a lithium precursor and then is subjected to surface-coating and the positive electrode active material is milled before and/or after the annealing, fluorine (F) is included in a predetermined amount on the surface of the positive electrode active material, and the crystal structure and crystallite size of the positive electrode active material analyzed by X-ray diffraction (XRD) are adjusted to fall within predetermined ranges. Accordingly, the present disclosure relates to a positive electrode active material excellent in the charging capacity, resistance characteristics and capacity characteristics and a method of recycling a positive electrode active material which is environmentally friendly because acid is not used in the recovery and recycling process, and thus a neutralization and wastewater treatment is not required, thereby reducing a process cost. Since the positive electrode active material is recycled without decomposition, there are no waste metal elements, and since no organic solvent is used, there is no generation of toxic gas or risk of explosion. Then, since the pre-washing process is omitted, the economic efficiency and productivity are greatly improved.

[Background Art]

A lithium secondary battery is largely composed of a positive electrode having a positive electrode active material layer coated on metal foil such as aluminum, a negative electrode having a negative electrode active material layer coated on metal foil such as copper, a separator that prevents the positive electrode and the negative electrode from mixing with each other, and an electrolyte through which lithium ions are allowed to move between the positive electrode and the negative electrode.

The positive electrode active material layer mainly uses lithium-based oxide as an active material, and the negative electrode active material layer mainly uses carbon material as an active material. A lithium cobalt oxide ($LiCoO_2$), a lithium nickel oxide ($LiNiO_2$), a lithium manganese oxide ($LiMnO_2$ or $LiMnO_4$), a lithium iron phosphate compound ($LiFePO_4$), and the like, are used for the lithium-based oxide. Among these, the lithium cobalt oxide used as the positive electrode active material of the lithium secondary battery has the advantages of high operating voltages and excellent capacity characteristics, but it is difficult to commercially apply the lithium cobalt oxide to large capacity batteries because cobalt which is raw material is expensive and its supply is unstable. Also, the lithium nickel oxide has poor structural stability, making it difficult to implement sufficient life characteristics whereas the lithium manganese oxide has excellent stability, but has a problem of poor capacity characteristics. Thus, in order to compensate for the problems of the lithium transition metal oxides, lithium composite transition metal oxides containing two or more types of transition metals have been developed, and among these, a lithium nickel cobalt manganese oxide containing nickel, cobalt, and manganese is widely used in the field of electric vehicle batteries.

Meanwhile, the lithium nickel cobalt manganese oxide is prone to particle breakage in the rolling process during the manufacturing of the positive electrode, and cracks occur inside particles in the charging/discharging process, thereby increasing the contact area with the electrolyte. Due to side reactions with the electrolyte, gas generation and active material deterioration are increased, which causes a problem of degradation of life characteristics.

In order to improve the problem, although a lithium nickel cobalt manganese oxide composed of high-strength single particles is applied to the positive electrode, the oxide is difficult to recover due to its high strength when discarded after use. Even when the oxide is recovered, there is a problem such as a reduced crystallinity. This causes a problem of degradation of battery performance when the recovered oxide is applied to the positive electrode of the lithium secondary battery.

Meanwhile, the positive electrode of the lithium secondary battery contains rare metals such as nickel, cobalt, or manganese. Thus, research is being conducted to recover and recycle rare metals from the positive electrode of the lithium secondary battery that is discarded after use or positive electrode scraps, and the like, generated in the lithium secondary battery manufacturing process (hereinafter, referred to as a 'waste positive electrode').

Conventional techniques of recovering rare metals, such as nickel, cobalt, and manganese, from the waste positive electrode of the lithium secondary battery mostly involve methods in which the waste positive electrode is dissolved with hydrochloric acid, sulfuric acid, or nitric acid, and then nickel, cobalt, manganese, and the like, are extracted with an organic solvent and then are used again as raw materials for synthesizing the positive electrode active material.

However, the rare metal extraction method using acid has a problem of environmental pollution, and a neutralization process and a wastewater treatment process are absolutely necessary, thereby significantly increasing the process cost. Also, the method has a disadvantage in that lithium that is the main metal of the positive electrode active material cannot be recovered.

In order to solve these shortcomings, a direct recycled method, in which a positive electrode active material is directly recycled from a waste positive electrode into a positive electrode active material without being decomposed, has recently been studied. As such methods, about four representative types are introduced, including calcination, solvent dissolution, aluminum (Al) foil dissolution, and crushing & screening.

However, in spite of a simple process, the calcination method has a disadvantage in that foreign substances that degrade the battery output performance, and the like, are generated on the surface of the recycled positive electrode active material, waste gas is generated, and energy consumption is high.

Also, through the solvent dissolution method, it is possible to obtain a recycled positive electrode active material with a relatively clean surface. However, there is a disadvantage in that the stability is poor and an expensive solvent recovery process is required because a solvent used for dissolving a binder, such as N-methyl-2-pyrrolidone (NMP), is toxic gas and has a risk of explosion.

Also, in the aluminum foil dissolution method, the process stability is good, the process cost is low, and it is easy to remove a binder. However, there is a disadvantage in that foreign substances that are difficult to remove are generated on the surface of the recycled positive electrode active material, and hydrogen gas is generated during an aluminum foil removal process, thereby causing a risk of explosion.

Lastly the crushing and screening method has the advantage of being based on the simplest process, but there is a disadvantage in that it is difficult to completely separate the current collector and the positive electrode active material, the particle size distribution of the positive electrode active material changes during a crushing process, and a binder remains, thereby deteriorating the battery characteristics of the recycled positive electrode active material.

Therefore, there is an urgent need to develop a positive electrode active material recycling method, in which a single-particle positive electrode active material is safely recycled from a waste positive electrode containing the single-particle positive electrode active material, without waste metal elements and without deteriorating the output performance, in an environmentally friendly manner with a small number of processes and a low cost.

[Disclosure]

[Technical Problem]

Therefore, the present invention has been made in view of the above problems, and it is one object of the present invention to provide a positive electrode active material and a method of recycling a positive electrode active material containing single particles. Since the single-particle-containing positive electrode active material recovered after heat treatment of a waste positive electrode is not subjected to a pre-washing process and is directly annealed through the addition of a lithium precursor and then is subjected to surface-coating and the positive electrode active material is milled before and/or after the annealing, fluorine (F) is included in a predetermined amount on the surface of the positive electrode active material, and the crystal structure and crystallite size of the positive electrode active material analyzed by X-ray diffraction (XRD) are adjusted to fall within predetermined ranges. The positive electrode active material is excellent in the charging capacity, resistance characteristics and capacity characteristics, and the method is environmentally friendly because acid is not used in the recovery and recycling process, and thus a neutralization and wastewater treatment is not required, thereby reducing a process cost. Since the positive electrode active material is recycled without decomposition, there are no waste metal elements, and since no organic solvent is used, there is no generation of toxic gas or risk of explosion. Then, since the pre-washing process is omitted, the economic efficiency and productivity are greatly improved.

Also, it is another object of the present invention to provide a secondary battery excellent in the initial discharging capacity and capacity characteristics.

The above and other objects can be accomplished by the present disclosure described below.

[Technical Solution]

In order to achieve the above object, I) the present invention provides a positive electrode active material comprising at least one type selected from a lithium nickel oxide (LNO)-based positive electrode active material, a nickel·cobalt·manganese (NCM)-based positive electrode active material, a nickel·cobalt·aluminum (NCA)-based positive electrode active material and a nickel·cobalt·manganese·aluminum (NCMA)-based positive electrode active material, wherein the positive electrode active material contains single particles, the content of F is 5,700 mg/kg to 6,500 mg/kg, and/or an a-axis lattice parameter of the positive electrode active material measured by an XRD analysis is 2.8753 Å to 2.8772 Å, a c-axis lattice parameter of the positive electrode active material is 14.243 Å to 14.255 Å, a cell volume of the positive electrode active material is 101.968 Å$^3$ to 102.168 Å$^3$ and a crystallite size of the positive electrode active material is greater than 130 nm and equal to or less than 136 nm.

II) in I), the positive electrode active material may contain 40 mol% or more of Ni based on 100 mol% of all remaining metals excluding Li.

III) in I) or II), the positive electrode active material may have a surface coated with a coating agent containing metal or carbon.

IV) in I) to III), the positive electrode active material may be a recycled positive electrode active material.

Also, V) the present disclosure provides a positive electrode active material recycling method comprising the steps of: (a) performing heat treatment of a waste positive electrode having a positive electrode active material layer formed on a current collector at 300 °C to 650 °C so as to thermally decompose a binder and a conductive material in the positive electrode active material layer and to recover a single-particle-containing positive electrode active material in the positive electrode active material layer; (b) adding a lithium precursor to the recovered positive electrode active material and annealing the positive electrode active material at 400 °C to 1,000 °C; (c) washing the annealed positive electrode active material with a washing solution; and (d) performing surface-coating of the washed positive electrode active material, in which the positive electrode active material recycling method includes: the step of performing milling before the recovered positive electrode active material is annealed in the step (b); and/or the step of performing milling before the annealed positive electrode active material is washed in the step (c), or a positive electrode active material recycling method comprising the steps of: (a) performing heat treatment of a waste positive electrode having a mid-nickel positive electrode active material layer formed on a current collector at 300 °C to 650 °C so as to thermally decompose a binder and a conductive material in the positive electrode active material layer and to recover a single-particle-containing positive electrode active material in the positive electrode active material layer; (b) adding a lithium precursor to the recovered positive electrode active material and annealing the positive electrode active material at 400 °C to 1,000 °C; (c) washing the annealed positive electrode active material with a washing solution; and (d) performing surface-coating of the washed positive electrode active material, in which the positive electrode active material recycling method includes: the step of performing milling before the recovered positive electrode active material is annealed in the step (b); and/or the step of performing milling before the annealed positive electrode active material is washed in the step (c).

In the description of the present disclosure, the mid-nickel positive electrode active material may mean a positive electrode active material containing 40 mol% or more of nickel, specifically, 40 to 70 mol% based on 100 mol% of all metals excluding lithium, *i.e.,* 100 mol% of all transition metals.

In the description of the present disclosure, the milling step prior to annealing means that milling is performed before the lithium precursor is added to the positive electrode active material recovered after the heat treatment of the waste positive electrode.

VI) in I) to V), the positive electrode active material may be at least one type selected from a LNO-based positive electrode active material, a NCM-based positive electrode active material, a NCA-based positive electrode active material, and a NCMA-based positive electrode active material, and contain 40 mol% or more of Ni based on 100 mol% of all remaining metals excluding Li.

VII) in V) to VI), the milling may be carried out by using a centrifugal mill, a jet mill, or a pin mill.

VIII) in V) to VII), the milling may be carried out at 6,000 rpm to 18,000 rpm.

IX) in V) to VIII), the lithium precursor may contain at least one of LiOH, Li$_2$CO$_3$, LiNO$_3$, and Li$_2$O.

X) in V) to IX), in the step (b), the lithium precursor may be added at least in an amount reduced from a molar ratio of lithium in the positive electrode active material in the step (a) on the basis of the amount of lithium in the recovered positive electrode active material.

XI) in V) to X), in the washing in the step (c), a weight ratio of the annealed positive electrode active material or the milled positive electrode active material to the washing solution may be 1:0.5 to 1:5.5.

XII) in V) to XI), the step (c) may include the step of mixing the annealed positive electrode active material or the milled positive electrode active material with the washing solution and performing filtration; and the step of drying a solid positive electrode active material obtained after the filtration.

XIII) in V) to XII), in the surface-coating of the step (d), a surface may be coated with at least one type of a metal, an organic metal, and a carbon component in a solid or liquid manner and then heat treatment may be performed at 100 °C to 1,200 °C.

Also, XIV) the present disclosure provides a secondary battery that characteristically includes the positive electrode active material of any one of I) to IV).

[Advantageous effects]

According to the present disclosure, the single-particle-containing positive electrode active material recovered after heat treatment of a waste positive electrode is not subjected to a pre-washing process and is directly annealed through the addition of a lithium precursor and then is subjected to surface-coating. Since the positive electrode active material is milled before and/or after the annealing, fluorine (F) is included in a predetermined amount on the surface of the positive electrode active material, and the crystal structure and crystallite size of the positive electrode active material analyzed by an XRD analysis are adjusted to fall within predetermined ranges. There is an effect of providing a positive electrode active material excellent in charging capacity, resistance characteristics and capacity characteristics.

Also, the single-particle positive electrode active material is easily recycled directly from a waste positive electrode without deterioration of battery performance. The method is environmentally friendly because acid is not used in the recovery and recycling process of the positive electrode active material, and thus a neutralization and wastewater treatment is not required, thereby reducing the process cost. Since the positive electrode active material is recycled as it is without decomposition, there are no waste metal elements, and then since no organic solvent is used, there is no generation of toxic gas or risk of explosion. In particular, since a pre-washing process is omitted, there is an effect of providing a positive electrode active material recycling method with greatly improved economic efficiency and productivity.

[Description of Drawings]

The drawings attached herewith are merely illustrative of embodiments of the present disclosure, and take on the role of further facilitating the understanding of the technical idea of the present disclosure along with the descriptions herein. Thus, the present disclosure should not be construed as being limited to those illustrated in the drawings.

FIG. 1 is a view illustrating a positive electrode scrap that is to be discarded after electrode plates are cut out of a positive electrode sheet.

FIG. 2 is a graph of capacity retention rates measured for recycled or new positive electrode active materials manufactured or prepared in Examples 1 to 3, and Comparative Examples 1 to 5.

FIG. 3 is a flowchart of a recycling process of a positive electrode active material containing single particles according to the present disclosure.

[Best mode]

The present inventors conducted research into a direct recycled method in which a positive electrode active material containing single particles is directly recycled from a waste positive electrode into a positive electrode active material having excellent output performance (rate performance) without being decomposed. During the research, it was confirmed that when the single-particle positive electrode active material recovered by heat treatment of a waste positive electrode is directly added with a lithium precursor and is annealed without a washing process, and milling is performed before and/or after the recovered positive electrode active material is annealed, the recycled single-particle positive electrode active material contains fluorine in a predetermined amount, and the crystal structure and crystallite size analyzed by X-ray diffraction analysis (XRD) are adjusted to fall within predetermined ranges, thereby significantly improving the charging capacity, resistance characteristics and capacity characteristics. Based on these results, the present inventors conducted further studies to complete the present invention.

Hereinafter, descriptions will be made on a positive electrode active material and a recycling method thereof, according to the description of the present disclosure.

Meanwhile, terms or words used in the present specification and claims should not be limitedly construed as usual or dictionary meanings, and should be interpreted as meanings and concepts consistent with the technical idea of the present disclosure on the basis of the principle that the inventor can appropriately define the concept of the term in order to explain his/her own application in the best way. Therefore, the embodiments described in this specification and the configurations illustrated in the drawings are only examples of the present disclosure, and do not represent all of the technical ideas of the present disclosure. Thus, it should be understood that there may be various equivalents and modifications that can replace them, and that they can be arranged, replaced, combined, separated, or designed in other various configurations.

Unless otherwise defined, all technical and scientific terms used in the description of the present disclosure have the same meanings as those commonly understood by a person of ordinary skill in the technical field to which the present disclosure belongs.

**Single-particle positive electrode active material**

The positive electrode active material of the present disclosure is at least one type selected from a lithium nickel oxide (LNO)-based positive electrode active material, a nickel·cobalt·manganese (NCM)-based positive electrode active material, a nickel·cobalt·aluminum (NCA)-based positive electrode active material and a nickel·cobalt·manganese·aluminum (NCMA)-based positive electrode active material. In the positive electrode active material, single particles are included; the content of F is 5,700 mg/kg to 6,500 mg/kg; and/or the a-axis lattice parameter measured by an XRD is 2.8753 Å to 2.8772 Å, the c-axis lattice parameter is 14.243 Å to 14.255 Å, the cell volume is 101.968 $Å^3$ to 102.168 $Å^3$, and the crystallite size has a value greater than 130 nm and equal to or less than 136 nm. In a case where these conditions are satisfied, there are effects such as excellence in charging capacity, resistance characteristics and capacity characteristics.

The positive electrode active material may contain, preferably, at least one type selected from lithium cobalt oxide such as $LiCoO_2$ (hereinafter, referred to as 'LCO'); lithium manganese oxide such as $LiMnO_2$ or $LiMn_2O_4$; lithium iron phosphate compounds such as $LiFePO_4$; lithium nickel cobalt aluminum oxide (NCA); lithium nickel oxide such as $LiNiO_2$; nickel manganese-based lithium composite metal oxide obtained by replacing a part of nickel (Ni) of the lithium nickel oxide with manganese (Mn); and NCM-based lithium composite transition metal oxide obtained by replacing a part of nickel (Ni) of the lithium nickel oxide with manganese (Mn) and cobalt (Co). In this case, there are effects such as excellence in electrochemical performance, resistance characteristics and capacity characteristics.

As a specific example, the positive electrode active material may contain a compound represented by the following formula 1, and has effects such as excellence in the electrochemical performance, resistance characteristics and capacity characteristics.

[Formula 1]     $Li_aNi_xMn_yCo_zM_wO_{2+\delta}$

(in the above formula 1, M includes at least one type selected from B, W, Al, Ti and Mg, $1<a\leq1.1$, $0<x<0.95$, $0<y<0.8$, $0<z<1.0$, $0\leq w\leq0.1$, $-0.02\leq\delta\leq0.02$, and $x+y+z+w=1$.)

The positive electrode active material may contain, for example, 40 mol% or more, 40 mol% to 95 mol%, more preferably 40 mol% to 70 mol% (here, the positive electrode active material may be referred to as a mid-nickel positive electrode active material), still more preferably 50 mol% to 70 mol% of Ni, based on 100 mol% of all remaining metals excluding Li. Within this range, there are effects such as excellence in initial discharging capacity, output performance, capacity characteristics, and resistance characteristics.

In the description of the present disclosure, as long as the Ni content is measured by a method using IC (Ion Chromatography), etc. commonly used in the technical field to which the present disclosure belongs, as a specific example, the measurement may be performed using an IC-ICP (Inductively Coupled Plasma) analyzer, an IC-ICP-MS analyzer, or an IC-ICP-AEC analyzer with no particular limitation.

The positive electrode active material may preferably include single particles, more preferably and does not include secondary particles. In this case, there is an effect of providing a positive electrode active material, in which there is no particle breakage during the electrode manufacturing process so that a battery performance degradation caused by fine powder does not occur, life characteristics are excellent in the high-voltage environment, the thermal stability is high, and the amount of gas generated by charging/discharging is small.

The single particle may be a single particle generally used in the technical field to which the present disclosure belongs, under the conditions of the definition of the present invention, and may be, for example, a particle composed of 30 or fewer nodules, or may be, preferably, a particle composed of 1 to 20 nodules, more preferably a particle composed of 1 to 10 nodules, still more preferably a particle composed of 1 to 5 nodules, most preferably a particle composed of one nodule. In this case, there is an effect of providing a positive electrode material, in which there is no particle breakage during the electrode manufacturing process so that a battery performance degradation caused by fine powder does not occur, life characteristics are excellent in the high-voltage environment, the thermal stability is high, and the amount of gas generated by charging/discharging is small.

In the description of the present disclosure, a nodule refers to a particle unit body that constitutes a single particle, and may refer to a single crystal having no crystalline grain boundary, or a polycrystal having no grain boundary in appearance when observed using a scanning electron microscope (SEM) or an electron backscatter diffraction (EBSD) pattern analyzer in a field of view of 5000 to 20000 times.

In the description of the present disclosure, the number of nodules means the average number of nodules of positive electrode active material particles. Here, in order to obtain the number of nodules, a positive electrode including a positive electrode active material is cut by an ion milling method and a cross-sectional image in the thickness direction of the cut positive electrode is secured by using a SEM, and then, in the cross-sectional image, at least 30 particles are selected for each of the largest-size positive electrode active material particle and the smallest-size positive electrode active material particle. Thereafter, through an SEM image analysis, the numbers of nodules may be measured from the cross-section for each positive electrode active material particle, and an arithmetic mean of these may be calculated.

The average particle diameter ($D_{50}$) of the single particles may be, preferably, 2 $\mu$m to 10 $\mu$m, more preferably 2 $\mu$m to 8 $\mu$m, still more preferably 3 $\mu$m to 6 $\mu$m.

In the description of the present disclosure, the average particle diameter ($D_{50}$) may be defined as a particle diameter corresponding to 50% of the volume cumulative amount in the particle size distribution (PSD). The average particle diameter ($D_{50}$) may be measured by using, for example, a laser diffraction method. Specifically, in the measurement method of the average particle diameter ($D_{50}$) of the positive electrode active material, positive electrode active material particles are dispersed in a dispersion medium, and then are introduced into a commercially available laser diffraction particle size measurement device (*e.g.*, Microtrac MT 3000) and are irradiated with ultrasonic waves of about 28 kHz with an output of 60 W. Then, an average particle diameter ($D_{50}$) corresponding to 50% of the volume cumulative amount in the measuring device may be calculated.

The positive electrode active material may contain, preferably 5,700 mg/kg to 6,500 mg/kg, more preferably 5,800 mg/kg to 6,300 mg/kg, still more preferably 5,800 mg/kg to 6,100 mg/kg of fluorine (F), and within this range, there are effects such as excellence in charging capacity, resistance characteristics and capacity characteristics.

In the description of the present disclosure, as long as the fluorine (F) content is measured by a method using IC, etc. commonly used in the technical field to which the present disclosure belongs, as a specific example, the measurement may be performed using an IC-ICP analyzer, an IC-ICP-MS analyzer or an IC-ICP-AEC analyzer with no particular limitation.

In the positive electrode active material, the a-axis lattice parameter measured by an XRD analysis may be, for example, 2.8753 Å to 2.8772 Å, preferably 2.8760 Å to 2.8770 Å, more preferably 2.8762 Å to 2.8768 Å, still more preferably 2.8764 Å to 2.8768 Å. Within this range, the positive electrode active material has a smaller a-axis lattice parameter than a raw-material positive electrode active material, and thus, has a different lattice structure, and there are effects such as excellence in the charging capacity, resistance characteristics, and capacity characteristics.

In the positive electrode active material, the c-axis lattice parameter measured by an XRD analysis may be, for example, 14.243 Å to 14.255 Å, preferably 14.245 Å to 14.254 Å, more preferably 14.247 Å to 14.254 Å, still more preferably 14.249 Å to 14.254 Å. Within this range, the lithium concentration in the lattice is increased in the c-axis indicating a z-axis direction in a layered structure, and there are effects such as excellence in the charging capacity, resistance characteristics, and capacity characteristics.

In the positive electrode active material, for example, the cell volume measured by an XRD analysis may be, for example, 101.968 Å$^3$ to 102.168 Å$^3$, preferably 101.980 Å$^3$ to 102.163 Å$^3$, more preferably 102.000 Å$^3$ to 102.158 Å$^3$, still more preferably 102.100 Å$^3$ to 102.153 Å$^3$. Within this range, there are effects such as excellence in the charging capacity, resistance characteristics, and capacity characteristics.

In the positive electrode active material, for example, the crystallite size measured by an XRD analysis may be, for example, greater than 130 nm and equal to or less than 136 nm, preferably 131 nm to 135 nm, preferably 131 nm to 134 nm. Within this range, the crystallite size is larger than that of the secondary particles, and the ion conductivity is improved, so that there are effects such as excellence in capacity characteristics.

In the description of the present disclosure, the lattice parameter, the cell volume and the crystallite size of the positive electrode active material may be measured by an XRD analysis. Specifically, by indexing data measured through an XRD analysis using Cu K$\alpha$ X-rays, through Rietveld refinement, the lattice parameter may be calculated, the cell volume may be calculated by the product of the a-axis lattice parameter and the c-axis lattice parameter, and the crystallite size may be calculated using the Scherrer equation for the XRD measurement data.

In the description of the present disclosure, a crystal grain (crystalline) refers to a single crystal particle unit having a regular atomic arrangement.

For example, the positive electrode active material may have a surface coated with metal or carbon. Preferably, in the case of metal coating, without chemical and physical changes of a recycled positive electrode active material itself, the structural stability of the positive electrode active material is improved. Then, electrochemical characteristics such as output performance, life characteristics, and capacity are improved. Then, also, the replacement by heterogeneous elements on the surface of the positive electrode active material causes effects such as residual lithium amount reduction and pH reduction, thereby improving the physiochemical characteristics of a battery.

The metal is, preferably, at least one type selected from B, W, Al, Ti, Mg, Ni, Co, Mn, Si, Zr, Ge, Sn, Cr, Fe, V and Y, is, more preferably, at least one type selected from B, W, Al, Ti and Mg, even more preferably is boron (B), tungsten (W) or a mixture thereof, still even more preferably is tungsten (W) and boron (B). In one embodiment, the metal is tungsten boride (WB), and in this case, there is an effect of improving resistance characteristics and life characteristics.

The boron-containing coating agent may be, preferably, at least one type selected from $H_3BO_3$, $B_2O_3$, $C_6H_5B(OH)_2$, $(C_6H_5O)_3B$, $[CH_3(CH_2)_3O]_3B$, $C_{13}H_{19}BO_3$, $C_3H_9B_3O_6$ and $(C_3H_7O)_3B$, more preferably may be $H_3BO_3$. In this case, there is an effect of improving resistance characteristics and life characteristics.

The coating agent may be included, for example, in an amount of 0.001 mol% to 0.3 mol%, preferably 0.01 mol% to 0.3 mol%, more preferably 0.01 mol% to 0.15 mol%, even more preferably 0.01 mol% to 0.1 mol%, still even more preferably 0.01 mol% to 0.05 mol% with respect to 1 mol% of metal in the uncoated positive electrode active material.

Within this range, there is an effect of improving the structural stability and the electrochemical performance while maintaining the properties of the single-particle positive electrode active material itself as they are.

In the coating of the surface, the surface is coated with a coating agent containing, preferably, at least one type of a metal, an organic metal, and a carbon component in a solid or liquid manner, and then heat treatment is performed at 100 °C to 1,200 °C. In this case, there is an effect of improving the structural stability and the electrochemical performance while maintaining the properties of the positive electrode active material itself as they are.

The positive electrode active material may be, for example, a recycled positive electrode active material. In this case, there are advantages such as excellence in economic efficiency and productivity.

**Single-particle positive electrode active material recycling method**

The positive electrode active material recycling method of the present disclosure includes the steps of: (a) performing heat treatment of a waste positive electrode having a positive electrode active material layer formed on a current collector at 300 °C to 650 °C so as to thermally decompose a binder and a conductive material in the positive electrode active material layer and to recover a single-particle-containing positive electrode active material in the positive electrode active material layer; (b) adding a lithium precursor to the recovered positive electrode active material and annealing the positive electrode active material at 400 °C to 1,000 °C; (c) washing the annealed positive electrode active material with a washing solution; and (d) performing surface-coating of the washed positive electrode active material. This method includes the step of milling before the step (b) of annealing the recovered positive electrode active material; and/or the step of milling before the step (c) of washing the annealed positive electrode active material. In this case, provided is a recycled single-particle positive electrode active material, in which fluorine (F) is included in a predetermined amount on the surface of the positive electrode active material, and the crystal structure and crystallite size of the positive electrode active material analyzed by XRD fall within predetermined ranges. Thus, the charging capacity, resistance characteristics, and capacity characteristics are excellent. The method is environmentally friendly because acid is not used in the recovery and recycling process, and thus neutralization and wastewater treatment are not required, thereby reducing the process cost. Since the positive electrode active material is recycled as it is without decomposition, there are no waste metal elements, and then since no organic solvent is used, there is no generation of toxic gas or risk of explosion. In particular, there is an effect of a significant improvement in economic efficiency and productivity because the single-particle positive electrode active material is easily recycled directly from the waste positive electrode without deterioration of battery performance.

In another example, the positive electrode active material recycling method of the present disclosure includes the steps of: (a) performing heat treatment of a waste positive electrode having a mid-nickel positive electrode active material layer formed on a current collector at 300 °C to 650 °C so as to thermally decompose a binder and a conductive material in the positive electrode active material layer and to recover a single-particle-containing positive electrode active material in the positive electrode active material layer; (b) adding a lithium precursor to the recovered positive electrode active material and annealing the positive electrode active material at 400 °C to 1,000 °C; (c) washing the annealed positive electrode active material with a washing solution; and (d) performing surface-coating of the washed positive electrode active material. The method includes the step of milling before the step (b) of annealing the recovered positive electrode active material; and/or the step of milling before the step (c) of washing the annealed positive electrode active material. In this case, provided is a recycled single-particle mid-nickel positive electrode active material, in which fluorine (F) is included in a predetermined amount on the surface of the positive electrode active material, and the crystal structure and crystallite size of the positive electrode active material analyzed by XRD fall within predetermined ranges. Thus, the charging capacity, resistance characteristics, and capacity characteristics are excellent. The method is environmentally friendly because acid is not used in the recovery and recycling process, and thus neutralization and wastewater treatment are not required, thereby reducing a process cost. Since the positive electrode active material is recycled as it is without decomposition, there are no waste metal elements, and then since no organic solvent is used, there is no generation of toxic gas or risk of explosion. In particular, there is an effect of a significant improvement in economic efficiency and productivity because the single-particle positive electrode active material is easily recycled directly from the waste positive electrode without deterioration of battery performance.

In the description of the present disclosure, the step of milling before annealing means milling before the lithium precursor is added to the positive electrode active material recovered after the heat treatment of the waste positive electrode.

Hereinafter, the positive electrode active material recycling method will be described in detail for each of the separate steps.

**(a) Step of recovering single-particle positive electrode active material from waste positive electrode**

The step (a) of recovering the single-particle positive electrode active material from the waste positive electrode, according to the present disclosure, may preferably include the step of performing heat treatment of the waste positive electrode having the positive electrode active material layer formed on the current collector at 300 °C to 650 °C so as to thermally decompose the binder and the conductive material in the positive electrode active material layer and to recover the single-particle-containing positive electrode active material in the positive electrode active material layer. In this case, the positive electrode active material has an effect such as a simple process and a clean removal of a binder, a conductive material, and a current collector.

In another example, the step (a) according to the present disclosure may include the step of performing heat treatment of the waste positive electrode having the single-particle mid-nickel positive electrode active material layer formed on the current collector at 300 °C to 650 °C so as to thermally decompose the binder and the conductive material in the positive electrode active material layer and to recover the single-particle mid-nickel positive electrode active material in the positive electrode active material layer. In this case, the mid-nickel positive electrode active material has an effect such as a simple process and a clean removal of a binder, a conductive material, and a current collector.

The waste positive electrode may preferably be a positive electrode separated from a lithium secondary battery that is discarded after use, defective positive electrode sheets or positive electrode scraps generated in the lithium secondary battery manufacturing process, more preferably positive electrode scraps remaining after positive electrode plates are obtained by punching the positive electrode sheet.

The positive electrode active material layer in the step (a) may preferably include a positive electrode active material, a binder, and a conductive material.

The positive electrode active material may be, preferably, at least one type selected from lithium cobalt oxide such as $LiCoO_2$ (hereinafter, referred to as 'LCO'); lithium manganese oxide such as $LiMnO_2$ or $LiMn_2O_4$; lithium iron phosphate compounds such as $LiFePO_4$; lithium nickel cobalt aluminum oxide (NCA); lithium nickel oxide such as $LiNiO_2$; nickel manganese-based lithium composite metal oxide obtained by replacing a part of nickel (Ni) of the lithium nickel oxide with manganese (Mn); and NCM-based lithium composite transition metal oxide obtained by replacing a part of nickel (Ni) of the lithium nickel oxide with manganese (Mn) and cobalt (Co). The positive electrode active material may be, more preferably, nickel manganese-based lithium composite metal oxide, NCM-based lithium composite transition metal oxide, or a mixture thereof, and in this case, there are effects such as excellence in reversible capacity and thermal stability.

In another specific example, the positive electrode active material may be a compound represented by the following formula 1.

$$[\text{Formula 1}] \qquad Li_aNi_xMn_yCo_zM_wO_{2+\delta}$$

(in the above formula 1, M includes at least one type selected from B, W, Al, Ti, and Mg, $1<a\leq1.1$, $0<x<0.95$, $0<y<0.8$, $0<z<1.0$, $0\leq w\leq0.1$, $-0.02\leq\delta\leq0.02$, and $x+y+z+w=1$.)

The positive electrode active material may contain, for example, 40 mol% or more, 40 mol% to 95 mol%, more preferably 40 mol% to 70 mol% (here, the positive electrode active material may be referred to as a mid-nickel positive electrode active material), still more preferably 50 mol% to 70 mol% of Ni based on 100 mol% of all remaining metals excluding Li. Within this range, there are effects such as excellence in the initial discharging capacity, the output performance, the capacity characteristics, and the resistance characteristics.

The positive electrode active material recovered in the step (a) may be preferably single particles, and may, more preferably, not include secondary particles. In this case, there is an effect of providing a recycled positive electrode active material, in which there is no particle breakage during the electrode manufacturing process so that a battery performance degradation caused by fine powder does not occur, life characteristics are excellent in the high-voltage environment, the thermal stability is high, and the amount of gas generated by charging/discharging is small.

The average particle diameter ($D_{50}$) of the single particles may be, preferably, 2 $\mu$m to 10 $\mu$m, more preferably 2 $\mu$m to 8 $\mu$m, still more preferably 3 $\mu$m to 6 $\mu$m.

In the description of the present disclosure, the average particle diameter ($D_{50}$) may be defined as a particle diameter corresponding to 50% of the volume cumulative amount in the particle size distribution (PSD). Specifically, the average particle diameter ($D_{50}$) may be measured by using a laser diffraction method. For example, in the measurement method of the average particle diameter ($D_{50}$) of the positive electrode active material, positive electrode active material particles are dispersed in a dispersion medium, and then are introduced into a commercially available laser diffraction particle size measurement device (e.g., Microtrac MT 3000) and are irradiated with ultrasonic waves of about 28 kHz with an output of 60 W. Then, an average particle diameter ($D_{50}$) corresponding to 50% of the volume cumulative amount in the measuring device may be calculated.

The conductive material may be, preferably, a carbon-based conductive material, or may be, for example, carbon black, CNT or a mixture thereof.

The binder may be, for example, a polymer binder, may be, preferably, polyvinylidene fluoride (PVdF), acrylonitrile-butadiene rubber (NBR) or a mixture thereof, more preferably may be polyvinylidene fluoride.

In the step (a), the temperature for the heat treatment may be, for example, 300 °C to 650 °C, preferably may be 400 °C to 600 °C, more preferably 500 °C to 600 °C, still more preferably 530 °C to 580 °C. Within this range, there is an advantage in that the positive electrode active material is easily separated from the current collector because the current collector is not melted, and only the binder, etc., are removed.

In the heat treatment, the temperature increase rate may be, for example, 1 °C/min to 20 °C/min, or may be, preferably, 3 °C/min to 10 °C/min, more preferably 3 °C/min to 7 °C/min. Within this range, there is an advantage in that the heat treatment can be implemented without causing a strain on the heat treatment equipment, and thermal shock, etc. are not caused in positive electrode scraps.

The heat treatment may be performed in, for example, an air or oxygen atmosphere, preferably may be performed under air, and in this case, carbon components in the binder and the conductive material react with oxygen and disappear as gases such as CO and $CO_2$. Thus, there is an advantage in that both the binder and the conductive material are removed.

The purity of the oxygen may be, for example, 59% or more, or may be, preferably, 70% or more, more preferably 80% or more, even more preferably 90% or more, still even more preferably 90 to 99%. Within this range, the binder and the conductive material are removed without remaining. Then, there is an advantage in that the stability of Ni in the recycled positive electrode active material is increased.

The purity % of the oxygen may be volume% or mol%.

In the description of the present disclosure, the purity of oxygen is not particularly limited when it is measured by a measurement method commonly used in the technical field to which the present disclosure belongs.

The air or oxygen may be supplied at a rate of, for example, 1 L/min to 20 L/min, preferably 1 L/min to 15 L/min, more preferably 2 L/min to 10 L/min, still more preferably 3 L/min to 7 L/min. Within this range, there is an advantage in that the positive electrode active material is easily separated from the current collector, and the separated positive electrode active material is easily sorted as a powder form.

The heat treatment time may be, preferably, 10 min to 5 h, more preferably 30 min to 5 h, even more preferably 30 min to 2 h, still even more preferably 30 min to 1 h. Within this range, there is an advantage in that the current collector is not melted, and only the binder, etc., are removed so that the positive electrode active material is easily separated from the current collector.

In the description of the present disclosure, the heat treatment time is the time required for treatment at the corresponding heat treatment temperature, and the time required until the corresponding heat treatment temperature is reached is not calculated.

The positive electrode active material recovered in the step (a) may, preferably, be directly subjected to a milling or annealing process without pre-washing. In this case, since the pre-washing process is omitted, there is an advantage in that the economic efficiency and productivity are greatly improved.

In the description of the present disclosure, pre-washing may mean washing performed before the lithium precursor is added, and post-washing may mean washing performed after the lithium precursor is added and annealing is performed.

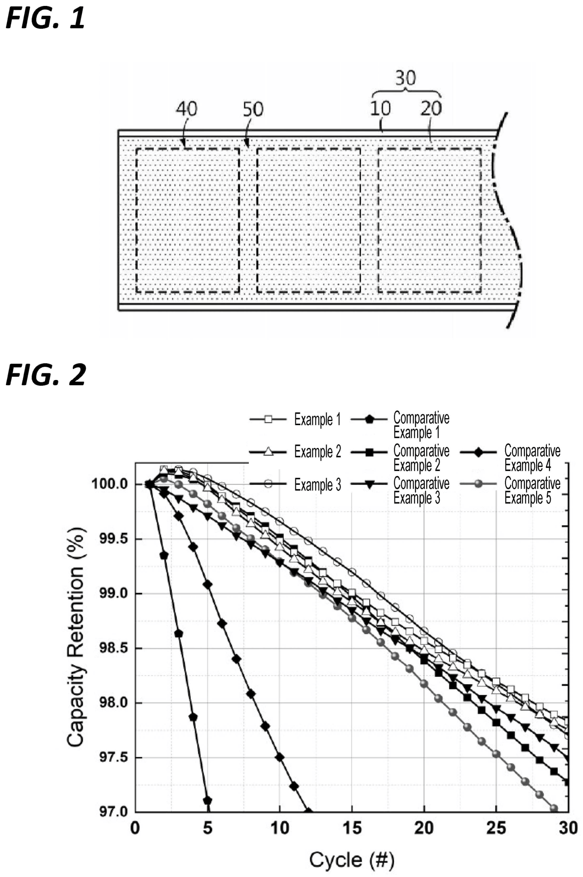

Referring to the following FIG. 1, an aluminum foil 10 which is a long sheet-type positive electrode current collector is coated with a positive electrode active material layer 20 containing a positive electrode active material, a conductive material, a binder, and the like, so as to produce a positive electrode sheet 30. Then, this sheet is punched to a certain size to produce positive electrode plates 40, and then a positive electrode scrap 50 is generated as the remaining portion. The punching is one means of cutting the positive electrode sheet.

Also, the positive electrode active material layer 20 is formed by coating the aluminum foil 10 with a slurry obtained by mixing a positive electrode active material, a conductive material, a binder, a solvent, and the like. Since the slurry is very sensitive to the environment such as temperature, it is very difficult to determine coating conditions. Then, a waste positive electrode sheet such as the positive electrode scrap 50 is generated until conditions for manufacturing the positive electrode sheet 30 of the desired quality are found through a certain test.

For reference, in the following examples, the positive electrode scrap 50 was used as a waste positive electrode.

**(b) Step of adding lithium precursor to recovered positive electrode active material and performing annealing**

The positive electrode active material recycling method of the present disclosure may include the step (b) of adding the lithium precursor to the recovered positive electrode active material and performing annealing at 400 °C to 1,000 °C. In this case, the crystal structure of the recycled positive electrode active material is restored, thereby providing a positive electrode active material excellent in efficiency, life characteristics and resistance characteristics. Then, there is an advantage in that the economic efficiency and productivity are greatly improved since the pre-washing process of the recovered positive electrode active material is omitted.

The annealing step may preferably include a milling step before annealing about the recovered positive electrode active material, and may include, specifically, a milling step before the lithium precursor is added. In this case, particles agglomerated during the heat treatment are released, and in the annealing step that is a subsequent process, the single-particle positive electrode active material is uniformly supplemented with the lithium precursor and then through the heat treatment, the crystal structure is restored. Thus, there are effects such as excellence in efficiency, life characteristics and resistance characteristics. Unlike a secondary-particle positive electrode active material, the single-particle positive electrode active material has fewer pores in particles. In addition, when the particles are agglomerated, it is difficult to uniformly replenish the positive electrode active material with the lithium precursor and to perform heat treatment. Thus, the agglomerated particles are, preferably, released through the milling. For reference, the state of the recovered secondary-particle positive electrode active material is different from that of the single-particle positive electrode active material. Thus, the recovered secondary-particle positive electrode active material has no milling effect according to the present disclosure, and is not transformed into the single-particle positive electrode active material even if milled.

Also, since the recovered positive electrode active material is directly milled without the pre-washing process, lithium loss caused by washing does not occur. There is an effect of further improving efficiency, life characteristics, and resistance characteristics.

The milling may be performed by using, for example, a centrifugal mill, a jet mill, or a pin mill, preferably the pin mill. In this case, there is an advantage in that the agglomerated particles are uniformly released and the surface of the positive electrode active material is not damaged.

The milling may be performed, for example, at 6,000 rpm to 18,000 rpm, or, preferably, at 8,000 rpm to 16,000 rpm, more preferably at 10,000 rpm to 13,000 rpm, still more preferably at 11,000 rpm to 13,000 rpm. Within this range, the particle agglomeration of the single-particle positive electrode active material is released, and in the annealing step that is a subsequent process, heat treatment is uniformly performed. Thus, the crystal structure restoration of the recycled positive electrode active material is greatly improved, and then there are effects such as excellence in efficiency, life characteristics and resistance characteristics.

In the annealing step (b), the lithium precursor is added to the recovered positive electrode active material, and annealing may be, preferably, performed in the air or oxygen ($O_2$) atmosphere, more preferably int the air. In this case, annealing leads to an improvement of crystallinity of the positive electrode active material such as crystallinity increase or crystal structure restoration. Thus, there is an effect of improving the battery characteristics of the recycled positive electrode active material.

The annealing temperature may be, preferably, 500 °C to 900 °C, more preferably 600 °C to 880 °C, still more preferably 700 °C to 800 °C. This case leads to an improvement of crystallinity of the positive electrode active material such as crystallinity increase or crystal structure restoration. Thus, there is an effect of improving the battery characteristics of the recycled positive electrode active material.

The lithium precursor may be at least one type selected from, preferably, LiOH, $Li_2CO_3$, $LiNO_3$, and $Li_2O$.

In the step (b), the lithium precursor may be added at least in an amount reduced from the molar ratio of lithium in the positive electrode active material in the step (a), on the basis of the amount of lithium in the recovered positive electrode active material. As a specific example, in a case where the positive electrode active material recovered in the step (a) is the positive electrode active material represented by the above formula 1, the lithium precursor may be added in such an amount that the molar ratio of lithium is 0.0001 to 0.2 when the molar ratio of lithium in the positive electrode active material is 1, or in such an amount that the molar ratio of lithium is preferably 0.001 to 0.1, more preferably 0.001 to 0.07, even more preferably 0.001 to 0.03, still even more preferably 0.001 to 0.02, especially preferably 0.005 to 0.017, especially more preferably 0.007 to 0.015, most preferably 0.009 to 0.013. Within these ranges, the shortage of lithium in the recycled positive electrode active material is filled up, leading to improvement of crystallinity such as crystallinity increase or crystal structure restoration. Thus, there is an advantage in that the battery characteristics of the recycled positive electrode active material are improved.

In another example, the lithium precursor may be added in an amount corresponding to 1 mol% to 40 mol% when lithium included in the raw-material positive electrode active material is 100 mol%, or may be added in, preferably, an amount corresponding to 1 mol% to 30 mol%, more preferably 7 mol% to 20 mol%. Within these ranges, a residual precursor that can increase the resistance in the recycled positive electrode active material does not remain, which is very useful for improving battery characteristics. Then, there is an economic advantage because the crystal structure may be restored with a smaller amount of lithium precursor than before.

The annealing temperature can be adjusted within a limited range depending on the melting point of the lithium precursor. For example, for $LiCO_3$ having a melting point of 723 °C, preferably, annealing may be performed at 700 °C to 900 °C, more preferably at 710 °C to 780 °C. For LiOH having a melting point of 462 °C, preferably, annealing may be performed at 400 °C to 750 °C, more preferably 500 °C to 720 °C, still more preferably 600 °C to 720 °C. Within these ranges, the crystal structure is restored, and thus, there are effects such as excellence in the efficiency, life characteristics, and resistance characteristics of batteries.

The above annealing temperature may preferably be a temperature exceeding the melting point of the lithium precursor, but if it exceeds 1,000 °C, thermal decomposition of the positive electrode active material may occur, resulting in a deterioration in the performance of the battery, so that it may preferably be 1,000 °C or less.

It is desirable that the annealing time may be, for example, 1 h or more or 15 h or less, preferably 1 h to 15 h, more preferably 2 h to 10 h, even more preferably 3 h to 8 h, still even more preferably 4 h to 6 h, or, as a specific example, 5 h. Within these ranges, the crystal structure is sufficiently restored, the crystallite size is larger than that of the secondary particles, and the ion conductivity is improved, leading to the effect of excellent capacity characteristics.

The annealing temperature may be reached at a heating rate of, preferably, 1 °C/min to 10 °C/min, more preferably 1 °C/min to 7 °C/min, still more preferably 2 °C/min to 4 °C/min. In this case, there is an effect of further increasing the crystallinity of the recycled positive electrode active material, thereby improving the battery characteristics of the recycled positive electrode active material.

The annealing step includes, as a specific example, a cooling process, and the cooling process may be, for example, natural cooling in a furnace. In this case, there is an effect of further increasing the crystallinity of the recycled positive electrode active material, thereby improving the battery characteristics of the recycled positive electrode active material.

In the description of the present disclosure, annealing may follow the definition used in the technical field to which the present disclosure belongs, and may be defined as, for a specific example, a heat treatment operation. The heat treatment operation heats a positive electrode active material with a deformed structure or lattice defects, at a temperature equal to or higher than a recrystallization temperature at which atoms of main components can be sufficiently diffused and moved, for an appropriate period of time, so that deformation or lattice defects is treated and the crystallinity is increased.

### (c) Step of washing annealed positive electrode active material (post-washing)

The positive electrode active material recycling method of the present disclosure includes the step (c) of washing the annealed positive electrode active material with the washing solution. In this case, the lithium precursor that is likely to remain on the surface of the positive electrode active material is removed with a washing solution. Then, there is an advantage in that a reaction between the residual lithium precursor and the electrolyte is prevented, thereby suppressing the degradation of battery performance and gas generation.

The washing step may preferably include a milling step before the annealed positive electrode active material is washed. In this case, agglomerated particles are released and are uniformly dispersed so that the lithium precursor and/or fluorine are effectively removed with a small amount of washing solution, thereby reducing wastewater. Then, in the application to a battery, there is an advantage in that the charging capacity, the resistance characteristics and the capacity characteristics are improved.

The milling may be performed by using, for example, a centrifugal mill, a jet mill, or a pin mill, preferably a pin mill. In this case, there is an advantage in that the agglomerated particles are uniformly released and the surface of the positive electrode active material is not damaged.

The milling may be carried out at, for example, 6,000 rpm to 18,000 rpm, preferably 8,000 rpm to 16,000 rpm, more preferably 10,000 rpm to 13,000 rpm, still more preferably 11,000 rpm to 13,000 rpm. Within these ranges, agglomerated particles of the positive electrode active material are released to form a uniform dispersion shape, and impurities are easily removed in the post-washing process. Thus, there is an advantage in that the charging capacity, resistance characteristics and capacity characteristics are improved.

The washing may preferably include a step of mixing the annealed positive electrode active material or the milled positive electrode active material with a washing solution, followed by a filtering step, and a step of drying the solid positive electrode active material obtained after the filtration. In this case, there is an effect of effectively removing excess lithium that tends to remain in the positive electrode active material. The above washing may preferably include a step of mixing the annealed positive electrode active material or the milled positive electrode active material with a washing solution, followed by a step of filtering, and a step of drying the positive electrode active material in a solid content obtained after the filtering. In this case, lithium precursors such as LiOH and $Li_2CO_3$ and/or fluorine, which tend to remain on the surface of the positive electrode active material, are effectively removed with a small amount of washing solution, and thus there is an effect of reducing wastewater.

The annealed positive electrode active material or the milled positive electrode active material may be mixed with the washing solution may be mixed at a weight ratio of, for example, 1:0.5 to 1:5.5, or at a weight ratio of, preferably 1:0.5 to 1:4.5, more preferably 1:0.5 to 1:3.5, still more preferably 1:0.5 to 1:2.5. In this case, lithium precursors such as LiOH and $Li_2CO_3$ and/or fluorine, which tend to remain on the surface of the positive electrode active material, are effectively removed with a small amount of washing solution, and thus there is an effect of reducing wastewater.

The washing solution may preferably be water or a basic lithium compound aqueous solution, more preferably water. In this case, lithium precursors such as LiOH and $Li_2CO_3$ are effectively removed with a small amount of washing solution. The lithium precursors are more likely to remain due to lithium excessively added to suppress a cation mixing phenomenon that is likely to occur in the recycled positive electrode active material, in particular, the recycled mid-nickel positive electrode active material. There is an effect of greatly improving the output performance of a battery without requiring wastewater treatment.

The water is, preferably, distilled water or deionized water. In this case, lithium precursors such as LiOH and

$Li_2CO_3$, which are likely to remain on the surface of the recycled positive electrode active material, are effectively removed with a small amount of washing solution. Then, there is the effect of reducing wastewater and greatly improving the output performance of a battery.

The basic lithium compound aqueous solution may contain, preferably, a lithium compound in an amount greater than 0 wt% and 15 wt% or less, more preferably in an amount greater than 0 wt% and 10 wt% or less. In this case, lithium precursors such as LiOH and $Li_2CO_3$ and/or fluorine, which are likely to remain on the surface of the positive electrode active material, are effectively removed with a small amount of washing solution. Then, there is the effect of reducing wastewater and greatly improving the output performance of a battery.

The annealed positive electrode active material and the washing solution are mixed, preferably, by stirring. The stirring is not particularly limited, but mechanical stirring or ultrasonic stirring may be used.

The stirring may be performed, preferably, within 30 min, more preferably 20 min, even more preferably 15 min, still even more preferably for 5 min to 10 min. Within these ranges, residual lithium is effectively removed.

### (d) Step of performing surface-coating of washed positive electrode active material to obtain reusable positive electrode active material

The positive electrode active material recycling method of the present disclosure includes the step (d) of performing surface-coating of the washed positive electrode active material to obtain a reusable positive electrode active material. In this case, there is an effect of improving the structural stability and the electrochemical performance while maintaining the excellent properties of the positive electrode active material itself, as they are.

In the surface-coating, the surface is coated with a coating agent containing, preferably, at least one type of a metal, an organic metal, and a carbon component in a solid or liquid manner, and then heat treatment is performed at 100 °C to 1,200 °C. In this case, there is an effect of improving the structural stability and the electrochemical performance while maintaining the excellent properties of the positive electrode active material itself, as they are.

The metal-containing coating agent is a coating agent that contains, preferably, at least one type selected from B, W, Al, Ti, Mg, Ni, Co, Mn, Si, Zr, Ge, Sn, Cr, Fe, V, and Y, more preferably may be a coating agent containing at least one type selected from B, W, Al, Ti, and Mg, even more preferably a coating agent containing boron (B), tungsten (W) or a mixture thereof, still even more preferably a coating agent containing tungsten (W) and boron (B), as a specific example, a coating agent containing tungsten boride (WB). In these cases, there is an effect of improving resistance characteristics and life characteristics.

The boron-containing coating agent may be, preferably, at least one type selected from $H_3BO_3$, $B_2O_3$, $C_6H_5B(OH)_2$, $(C_6H_5O)_3B$, $[CH_3(CH_2)_3O]_3B$, $C_{13}H_{19}BO_3$, $C_3H_9B_3O_6$, and $(C_3H_7O)_3B$, more preferably $H_3BO_3$. In this case, there is an effect of improving resistance characteristics and life characteristics.

The metal-containing coating agent may be, for example, an oxide or an acid that includes the metal as an element in the molecule.

The organic metal-containing coating agent is not particularly limited as long as it is an organic metal compound-containing coating agent that contains the above metal and is commonly used in the technical field to which the present disclosure belongs. It may be, as a specific example, metal alkoxide.

The carbon component-containing coating agent is not particularly limited as long as it is a coating agent that contains a carbon component and is commonly used in the technical field to which the present disclosure belongs. As a specific example, it may be sugar such as sucrose.

The coating agent may be included in, for example, an amount of 0.001 mol% to 0.3 mol% relative to 1 mol% of metal in the uncoated positive electrode active material on the basis of components actually coated on the positive electrode active material surface excluding a solvent, or may preferably be included in an amount of 0.01 mol% to 0.3 mol%, more preferably 0.01 mol% to 0.15 mol%, even more preferably 0.01 to 0.1 mol%, still even more preferably 0.01 mol% to 0.05 mol%. Within these ranges, there is an effect of improving the structural stability and the electrochemical performance while maintaining the excellent properties of the positive electrode active material itself, as they are.

The heat treatment temperature may be, preferably, 100 °C to 1,000 °C, more preferably 200 °C to 1,000 °C, still more preferably 200 °C to 500 °C. Within these ranges, performance degradation caused by the thermal decomposition of the recycled positive electrode active material does not occur. There is an effect of improving the structural stability and the electrochemical performance.

The time required for carrying out the heat treatment may be, preferably, 1 h to 16 h, more preferably 3 h to 7 h. Within these ranges, there is an effect of improving the structural stability and the electrochemical performance while maintaining the properties of the positive electrode active material itself, as they are.

The coating method is not particularly limited as long as it is a coating method commonly used in the technical field to which the present disclosure belongs. Examples thereof may include a liquid method in which a liquid coating agent is prepared and is mixed with a positive electrode active material, a mechanochemical method using the high mechanical energy of ball milling, a fluid bed coating method, a spray drying method, a precipitation method that allows a coating agent to be precipitated on the positive electrode active material surface in an aqueous solution state, a method utilizing a reaction between a gaseous coating agent and a positive electrode active material, and a sputtering method.

The metal, organic metal and carbon component may be, for example, spherical, plate-shaped, prismatic or needle-shaped, and these shapes may be controlled by changing process conditions, etc. during a manufacturing process. The definition of each shape is not particularly limited as long as it follows the definition commonly recognized in the technical field to which the present disclosure belongs.

For the coating agent, preferably, the average diameter may be 1 nm to 1000 nm, and the specific surface area may be 10 m$^2$/g to 100 m$^2$/g, more preferably the average diameter may be 10 nm to 100 nm, and the specific surface area may be 20 m$^2$/g to 100 m$^2$/g. Within these ranges, the coating agent uniformly adheres to the surface of the recycled positive electrode active material, and provides the structural stability of the recycled positive electrode active material. This prevents lattice deformation or crystal structure collapse of the positive electrode active material, thereby improving the problems of degradation of life characteristics and electrochemical performance.

In the description of the present disclosure, the average diameter may be measured by a measurement method commonly used in the technical field to which the present disclosure belongs, and may be measured by using, for example, a laser diffraction method. Specifically, in order to calculate the average particle diameter ($D_{50}$) based on 50% of the particle diameter distribution in a measuring device, positive electrode active material particles are dispersed in a dispersion medium, and then are introduced into a commercially available laser diffraction particle size measurement device such as Microtrac MT 3000, and are irradiated with ultrasonic waves of about 28 kHz with an output of 60 W.

In the description of the present disclosure, the specific surface area may be measured by a measurement method commonly used in the technical field to which the present disclosure belongs, and may be measured by, for example, a Brunauer-Emmett-Teller (BET) method. Specifically, it may be calculated from a nitrogen gas adsorption amount by using BELSORP-mini II of BEL Japan under a liquid nitrogen temperature (77K).

The positive electrode active material recycled by the positive electrode active material recycling method may contain, preferably, 5,700 mg/kg to 6,500 mg/kg, more preferably 5,800 mg/kg to 6,300 mg/kg, still more preferably 5,800 mg/kg to 6,100 mg/kg of fluorine (F). Within these ranges, there are effects such as excellence in charging capacity, resistance characteristics and capacity characteristics.

In the description of the present disclosure, the fluorine (F) content may be measured through an IC analysis device. Here, a general IC analysis device commonly used in laboratories may be used for measurement, but there is no deviation depending on the measuring device or method.

In the positive electrode active material recycled according to the positive electrode active material recycling method, the a-axis lattice parameter measured by an XRD analysis may be, for example, 2.8753 Å to 2.8772 Å, preferably 2.8760 Å to 2.8770 Å, more preferably 2.8762 Å to 2.8768 Å, still more preferably 2.8764 Å to 2.8768 Å. Within these ranges, the positive electrode active material has a smaller a-axis lattice parameter than a raw-material positive electrode active material, and thus has a different lattice structure. There are effects such as excellence in the charging capacity, resistance characteristics and capacity characteristics.

In the positive electrode active material recycled by the positive electrode active material recycling method, the c-axis lattice parameter measured by an XRD analysis may be, for example, 14.243 Å to 14.255 Å, preferably 14.245 Å to 14.254 Å, more preferably 14.247 Å to 14.254 Å, still more preferably 14.249 Å to 14.254 Å. Within these ranges, the lithium concentration in the lattice is increased in the c-axis indicating a z-axis direction in a layered structure. There are effects such as excellence in charging capacity, resistance characteristics, and capacity characteristics.

In the positive electrode active material recycled according to the positive electrode active material recycling method, the cell volume measured by, for example, an XRD analysis may be, for example, 101.968 Å to 102.168 Å$^3$, preferably 101.980 Å to 102.163 Å$^3$, more preferably 102.000 Å to 102.158 Å$^3$, still more preferably 102.100 Å to 102.153 Å$^3$. Within these ranges, there are effects such as excellence in charging capacity, resistance characteristics, and capacity characteristics.

In the positive electrode active material recycled according to the positive electrode active material recycling method, the crystallite size measured by, for example, an XRD analysis, may be, for example, greater than 130 nm and 136 nm or less, preferably 131 nm to 135 nm, preferably 131 nm to 134 nm. Within these ranges, the crystallite size is larger than that of the secondary particles, and the ion conductivity is improved, leading to the effect of excellent capacity characteristics.

Also, the present disclosure may provide a recycled positive electrode active material that is characteristically manufactured by the positive electrode active material recycling method. In this case, there are effects such as excellence in initial discharging capacity, output performance, capacity characteristics, and resistance characteristics.

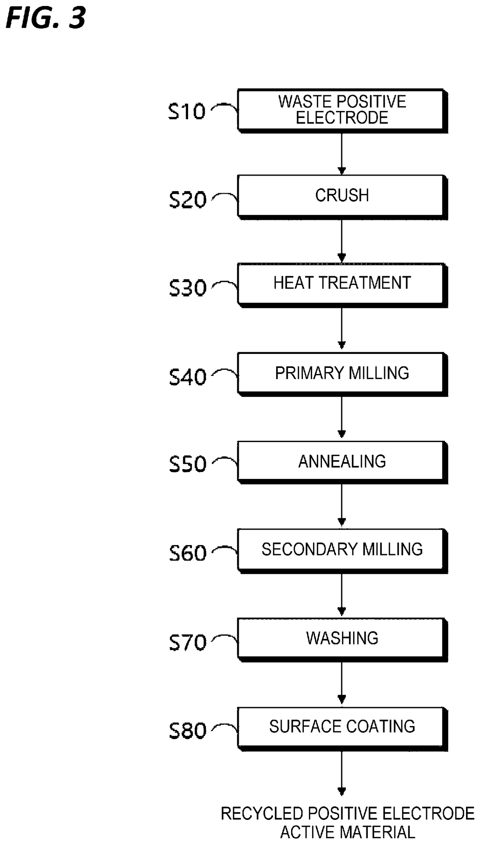

The following FIG. 3 is a flowchart of the recycling process of a positive electrode active material according to one embodiment of the present disclosure.

Referring to FIG. 3, first, a positive electrode scrap is prepared as a waste positive electrode (step S10).

For example, an aluminum foil is coated with a slurry that is prepared by adding NMP (N-methyl pyrrolidone) to single-particle mid-nickel NCM-based lithium composite transition metal oxide, carbon black and polyvinylidene fluoride, and mixing these, and is dried in a vacuum oven at about 120 °C to produce a positive electrode sheet. After this is punched to obtain positive electrode plates with a predetermined size, a remaining positive electrode scrap can be prepared.

The positive electrode scrap has a positive electrode active material layer on the aluminum foil. After the solvent evaporates, the positive electrode active material layer has a structure where the binder binds the positive electrode active material and the conductive material. Therefore, when the binder is removed, the positive electrode active material is separated from the aluminum foil.

Next, the prepared positive electrode scrap is crushed into an appropriate size (step S20).

Here, crushing includes cutting or shredding the positive electrode scrap into a size that is easy to handle. As a specific example, the crushed positive electrode scrap may have a size of 1 cm x 1 cm. For the crushing, for example, various dry grinding equipment such as a hand-mill, a pin-mill, a disc-mill, a cutting-mill, and a hammer-mill may be used, or a high-speed cutter may be used to increase productivity.

Whether to carry out the crushing or the size of the piece may be preferably determined by considering the handling of the positive electrode scrap and the characteristics required by equipment used in the subsequent process. For example, when equipment capable of performing continuous processing is used, the positive electrode scrap must be crushed into smaller pieces because flowability should be good.

Next, the positive electrode scrap is subjected to the heat treatment to recover the positive electrode active material (step S30). Here, the heat treatment is carried out to thermally decompose the binder in the active material layer. As described above, through the heat treatment, the binder and the conductive material in the active material layer are thermally decomposed into $CO_2$ and $H_2O$ and are removed. Since the binder is removed, the positive electrode active material is separated from the current collector, and the separated positive electrode active material is easily sorted as a powder form. Therefore, just through the step S30, the active material layer may be separated from the current collector, and then, the positive electrode active material in the active material layer may be recovered as a powder form.

The recovered positive electrode active material may contain single particles, and does not include, as a specific example, secondary particles. In this case, there is an effect of providing a positive electrode active material, in which there is no particle breakage during the electrode manufacturing process so that a battery performance degradation caused by fine powder does not occur, life characteristics are excellent in the high-voltage environment, the thermal stability is high, and the amount of gas generated by charging/discharging is small.

Importantly, the heat treatment may be performed in air or in an oxygen atmosphere, as a specific example, in air. When the heat treatment is performed in a reducing gas or inert gas atmosphere, the binder and the conductive material are carbonized without being thermally decomposed. Due to carbonization, a carbon component remains on the surface of the positive electrode active material, and then the performance of the reusable positive electrode active material is reduced. However, when the heat treatment is performed in air or in an oxygen atmosphere, the carbon components in the binder and the conductive material react with oxygen and disappear as gases such as CO and $CO_2$. Thus, both the binder and the conductive material are removed.

The heat treatment may be performed at, preferably, 300 °C to 650 °C, or may be performed at 550 °C as a specific example. In this case, below 300 °C, it is difficult to remove the binder, making it impossible to separate the current collector, and above 650 °C, the current collector melts, making it impossible to separate the current collector.

The heat treatment may be performed at a temperature increase rate of, preferably, 1 °C/min to 20 °C/min, more preferably 3 °C/min to 10 °C/min, as a specific example, 5 °C/min. Within these ranges, there is an advantage in that the heat treatment can be implemented without causing a strain on the heat treatment equipment, and thermal shock, etc. are not caused in positive electrode scraps.

The heat treatment may be performed for a period of time in which, for example, the binder can be sufficiently thermally decomposed, preferably, for 30 min or more, more preferably 30 min to 5 h. As a specific example, the heat treatment may be performed for 30 min. Within this range, the binder is sufficiently thermally decomposed and then there is an effect of excellent efficiency of thermal decomposition.

The heat treatment may be performed by using, for example, various types of furnaces, e.g., a box-type furnace. The heat treatment may be performed by a rotary kiln capable of performing continuous processing in consideration of productivity.

After the heat treatment, slow cooling or rapid cooling may be performed in the atmosphere.

Next, the recovered positive electrode active material is primarily milled (step S40).

In the primary milling step, it is important to directly mill the recovered positive electrode active material without a pre-washing process. In this case, the agglomerated positive electrode active material is released without damaging the surface of the single-particle positive electrode active material, thereby making particles uniform. Since no washing process is carried out, the lithium loss caused by washing does not occur. There is an effect of further improving efficiency, life characteristics, and resistance characteristics.

The primary milling may be performed by using, for example, a centrifugal mill, a jet mill, or a pin mill, as a specific example, by using the pin mill. In this case, there is an advantage in that the particles are made uniform without damaging the surface of the recovered single-particle positive electrode active material, thereby improving battery characteristics.

The primary milling may be performed at, for example, 6,000 rpm to 18,000 rpm, specifically 12,000 ppm. Within this range, there is an advantage in that the particles are made uniform without damaging the surface of the single-particle positive electrode active material, thereby improving battery characteristics.

Next, a lithium precursor is added to the primarily milled positive electrode active material and then annealed (step S50).

Since lithium loss occurs in the positive electrode active material through the previous step S30, the annealing step S50 compensates for such an amount of lithium loss. In addition, since a deformed structure (e.g., $Co_3O_4$ in the case of an LCO active material) may appear on the single-particle positive electrode active material surface through the previous step, in the step S50, through annealing, the crystal structure of the single-particle positive electrode active material is restored so as to improve battery characteristics of the recycled single-particle positive electrode active material or to restore these to the level of a new positive electrode active material. Here, 'new' is a concept opposite to 'recycled', means something that is first made, and is the same term as 'raw-material' used in the detailed description and examples of the present disclosure.

The lithium precursor may be, for example, at least one of LiOH, $Li_2CO_3$, $LiNO_3$ and $Li_2O$ and, as a specific example, LiOH may be used.

Preferably, the lithium precursor may be added at least in a lost amount of the molar ratio of lithium in comparison to the molar ratio of lithium to other metals in the new positive electrode active material used for the positive electrode active material layer. When an excessive amount of lithium precursor is added compared to the lost amount of lithium, an unreacted lithium precursor will remain in the recycled positive electrode active material. This serves to increase resistance, and thus an appropriate amount of lithium precursor needs to be added. For example, when the molar ratio of lithium to other metals in the new positive electrode active material is 1, a lithium precursor may be added in such an amount that the molar ratio of lithium is 0.001 to 0.4, preferably in such an amount that the molar ratio of lithium is 0.01 to 0.2.

As a specific example, when a lithium precursor is added at a molar ratio of 0.09 to 0.1 (based on a lithium metal), which is the loss ratio based on the lithium content in the new positive electrode active material, on the basis of the ICP analysis result, a capacity improvement effect equivalent to that of the new positive electrode active material is found. Here, the ICP analysis result has an error value of about $\pm 0.02$.

The annealing is performed in oxygen ($O_2$) or air, for example, under the condition of 400 °C to 1,000 °C, or as a specific example, is performed in air under the condition of 700 °C.

Preferably, the annealing temperature may exceed the melting point of the lithium precursor. However, the temperature should not exceed 1,000 °C because thermal decomposition of the positive electrode active material occurs at temperatures exceeding 1000 °C, resulting in a decrease in performance. When $Li_2CO_3$ is used as the lithium precursor, the annealing temperature may, suitably, be 700 °C to 900 °C, more preferably 710 °C to 780 °C, most preferably 750 °C to 780 °C. Also, when LiOH is used as the lithium precursor, the annealing temperature may, suitably, be 400 °C to 750 °C, more suitably 500 °C to 720 °C, most suitably 600 °C to 720 °C.

The annealing time may be, preferably for example, 1 hour or more, preferably 15 hour or less, and may be, more preferably, 4 hour to 6 hour. Long annealing times may allow sufficient restoration of crystal structure. However, longer annealing times do not significantly keep affecting performance. In this case, as for the annealing equipment, the same or similar equipment as that in the heat treatment step S30 may be used.

Next, the annealed positive electrode active material is secondarily milled (step S60).

In the secondary milling step S60, particles agglomerated through the annealing step S50 are released so that the particle size of the recycled positive electrode active material may be reduced and become similar to the particle size of the positive electrode active material in the waste positive electrode. This improves battery characteristics. Then, there is an advantage in that the lithium precursor and/or fluorine are effectively removed with a small amount of washing solution, thereby reducing wastewater.

The secondary milling may be carried out by using, for example, a centrifugal mill, a jet mill, or a pin mill, as a specific example, the milling process is carried out by using a pin mill. In this case, there is an advantage in that the particle size is reduced without damaging the particles of the recycled positive electrode active material.

The secondary milling may be carried out at, for example, 6,000 rpm to 16,000 rpm, as a specific example, at 12,000 rpm. Within this range, there are advantages of excellent milling efficiency, reduction in the particle size of the recycled positive electrode active material, and excellent productivity.

Next, the secondarily milled positive electrode active material is washed (step S70).

Since the lithium precursor that did not participate in the reaction in the above annealing step S50 is present in the form of LiOH and $Li_2CO_3$ on the surface of the positive electrode active material, a residual lithium removal process is required to remove it. Lithium impurities such as lithium carbonate ($Li_2CO_3$) remaining on the surface of the recycled positive electrode active material must be thoroughly removed because they may later react with the electrolyte, thereby reducing the battery performance and generating gas.

In the washing step S70, preferably, the positive electrode active material obtained from the annealing and a washing solution are mixed at a weight ratio of 1:0.5 to 1:5.5, as a specific example, a weight ratio of 1:1, and then are filtered. Then, the obtained solid positive electrode active material is dried. In this case, the particles agglomerated through milling in the previous step are released. Thus, there is an advantage in that the residual lithium is cleanly removed with a small amount of washing solution, reducing wastewater.

As for the washing solution, preferably, distilled water or a basic lithium compound aqueous solution containing a basic lithium compound in an amount of greater than 0 wt% and 10 wt% or less may be used. More preferably, the distilled water used as the washing solution. In this case, the washing solution is safe and inexpensive, and also there is an advantage in that transition metals present in the recycled positive electrode active material are not eluted.

The above washing is preferably performed by mixing the annealed positive electrode active material and the washing solution, filtering the mixture, and then drying the obtained solid positive electrode active material.

The annealed positive electrode active material and the washing solution are mixed, preferably, by stirring. The stirring is not particularly limited, but, preferably, mechanical stirring or ultrasonic stirring may be used.

The mechanical stirring is carried out under the conditions of, preferably, 250 rpm to 350 rpm and 3 min to 10 min.

The filtration may be, preferably, vacuum filtration using a filter, and the drying may be vacuum drying at 120 °C to 140 °C.

Next, surface-coating is performed on the washed positive electrode active material (step S80).

In the surface-coating, the surface is coated with a coating agent containing, for example, a metal, an organic metal, or a carbon component in a solid or liquid manner, and then heat treatment is performed. When the heat treatment temperature is too low, the surface protective layer of desired dissimilar metal is not formed, whereas when the heat treatment temperature is too high, the battery performance is reduced due to the thermal decomposition of the positive electrode active material.

Specifically, when the washed positive electrode active material is coated with a metal oxide or an acid of B, W, or B-W, and is subjected to heat treatment, a surface protective layer such as a lithium boroxide layer is formed on the positive electrode active material surface.

The solid or liquid method of the surface-coating may be a method such as, for example, mixing, milling, spray drying or grinding.

When the molar ratio of lithium: other metals in the positive electrode active material is 1:1 in the annealing step S50, due to a reaction between lithium in the recycled positive electrode active material with the coating agent in the surface-coating step S60, the molar ratio of lithium: other metals in the positive electrode active material is less than 1:1. Then, such a recycled positive electrode active material cannot sufficiently exhibit 100 % of the battery capacity. However, when an excessive amount of lithium precursor is added in the annealing step S40 such that the content of lithium is larger than that of other metals in the recycled positive electrode active material, by a molar ratio of 0.0001 to 0.1, the molar ratio of lithium: other metals in the positive electrode active material naturally becomes 1:1 due to the formation of the surface protective layer in the surface-coating step S60. Then, the battery capacity reduction does not occur.

**Secondary battery**

The secondary battery of the present disclosure includes the recycled single-particle positive electrode active material. In this case, since lithium remaining on the positive electrode active material surface is significantly reduced, the initial discharging capacity, output performance, capacity characteristics, and resistance characteristics are excellent. Also, this secondary battery is environmentally friendly because an acid and an organic solvent are not used in the recovery and recycling process of the positive electrode active material. In particular, since a pre-washing process is omitted, there are effects such as excellence in economic efficiency and productivity.

The secondary battery of the present disclosure may include the contents of both the above-described recycled single-particle positive electrode active material and the recycling method thereof. Therefore, here, redundant descriptions thereof will be omitted.

Hereinafter, preferred examples are presented to help the understanding of the present disclosure, but the following examples are only illustrative of the present disclosure, and it is obvious to those skilled in the art that various changes and modifications are possible within the scope of the present disclosure and the technical idea range. Then, it is also natural that such changes and modifications fall within the appended claims.

[Example]

Example 1

A positive electrode scrap (a current collector: an aluminum foil, a positive electrode active material: NCM-based lithium composite transition metal oxide (containing 61 mol% of Ni based on 100 mol% of all remaining metals except for Li)), which was discarded after positive electrode plates were obtained by punching, was crushed, and was subjected to heat treatment in air at 550 °C for 30 min so as to remove a binder and a conductive material. After the current collector and the positive electrode active material were separated from each other, the positive electrode active material was recovered. Here, the heat treatment temperature was reached at a temperature increase rate of 5 °C/min, and air was supplied at 3 L/min.

The recovered positive electrode active material was confirmed to be single particles through SEM photos.

The recovered positive electrode active material was directly primarily milled at 12,000 rpm by using a pin mill without pre-washing.

When lithium in the raw-material positive electrode active material is 100 mol%, LiOH as a lithium precursor was added to the primarily milled positive electrode active material in such an amount that lithium corresponding to 10 mol% can be provided. Then, annealing was performed in air at a calcination temperature of 700 °C for 5 h. Here, air was supplied at 3 L/min.

The annealed positive electrode active material was secondarily milled at 12,000 rpm by using a pin mill.

The secondarily milled positive electrode active material and distilled water were mixed at a weight ratio of 1:1 and were stirred for 5 min under the condition of 300 rpm. Then, through vacuum filtration, a solid was obtained. The solid was vacuum-dried at 130 °C for 12 h to obtain the washed positive electrode active material.

The washed positive electrode active material was coated with boric acid and then was heated for 5 h at 300 °C to produce a final recycled positive electrode active material. Here, the boric acid was added at 500 ppm on the basis of the total weight of the positive electrode active material, the heat treatment temperature was reached at a temperature increase rate of 2 °C/min, and the air was supplied at 3 L/min.

Here, the molar ratio of lithium to other metals in the positive electrode active material was measured by using an ICP analysis device, etc. Here, a general ICP analysis device commonly used in laboratories may be used for measurement, but there is no deviation depending on the measuring device or method.

In the description of the present disclosure, unless otherwise defined, ppm is based on weight.

Example 2

A recycled positive electrode active material was manufactured in the same manner as in Example 1 except that primary milling in Example 1 was not performed.

Example 3

A recycled positive electrode active material was manufactured in the same manner as in Example 1 except that secondary milling in Example 1 was not performed.

Comparative Example 1

A recycled positive electrode active material was manufactured in the same manner as in Example 1 except that NCM-based lithium composite transition metal oxide in a positive electrode scrap discarded after positive electrode plates were obtained by punching in Example 1 (containing 61 mol% of Ni based on 100 mol% of all remaining metals except for Li, single particles) was changed to NCM-based lithium composite transition metal oxide (containing 61 mol% of Ni based on 100 mol% of all remaining metals except for Li, secondary particles).

The positive electrode active material recovered after heat treatment was confirmed to be secondary particles through SEM photos.

Comparative Example 2

A positive electrode scrap (a current collector: an aluminum foil, a positive electrode active material: NCM-based lithium composite transition metal oxide (containing 61 mol% of Ni based on 100 mol% of all remaining metals except for Li)), which was discarded after positive electrode plates were obtained by punching, was crushed, and was subjected to heat treatment in air at 550 °C for 30 min so as to remove a binder and a conductive material. After the current collector and the positive electrode active material were separated from each other, the positive electrode active material was recovered. Here, the heat treatment temperature was reached at a temperature increase rate of 5 °C/min, and air was supplied at 3 L/min.

The recovered positive electrode active material was confirmed to be single particles through SEM photos.

The recovered positive electrode active material was washed by being immersed and stirred at the same time in distilled water. Here, after the recovered positive electrode active material and the distilled water were stirred at a weight ratio of 1:10 at 500 rpm for 10 min, vacuum filtration was performed by using a filter so that only an active material was extracted.

The washed positive electrode active material was dried at 100 °C overnight. Then, when lithium in the raw-material positive electrode active material is 100 mol%, LiOH as a lithium precursor was added in such an amount that lithium corresponding to 10 mol% can be provided. Then, annealing was performed in air at a calcination temperature of 700 °C for 5 h. Here, air was supplied at 3 L/min.

The annealed positive electrode active material and distilled water were mixed at a weight ratio of 1:1 and were stirred for 5 min under the condition of 300 rpm. Then, through vacuum filtration, a solid was obtained. The solid was vacuum-dried at 130 °C for 12 h to obtain the washed positive electrode active material.

The washed positive electrode active material was coated with boric acid and then was heated for 5 h at 300 °C to produce a final recycled positive electrode active material. Here, the boric acid was added at 500 ppm on the basis of the total weight of the positive electrode active material, the heat treatment temperature was reached at a temperature increase rate of 2 °C/min, and the air was supplied at 3 L/min.

Comparative Example 3

A recycled positive electrode active material was manufactured in the same manner as in Example 1 except that in the surface-coating step of Example 1, heating was performed at 300 °C for 5 h with no addition of boric acid to produce a final recycled positive electrode active material.

Comparative Example 4

A positive electrode scrap (a current collector: an aluminum foil, a positive electrode active material: NCM-based lithium composite transition metal oxide (containing 61 mol% of Ni based on 100 mol% of all remaining metals except for Li)), which was discarded after positive electrode plates were obtained by punching, was crushed, and was subjected to heat treatment in air at 550 °C for 30 min so as to remove a binder and a conductive material. After the current collector and the positive electrode active material were separated from each other, the positive electrode active material was recovered. Here, the heat treatment temperature was reached at a temperature increase rate of 5 °C/min, and air was supplied at 3 L/min.

The recovered positive electrode active material was confirmed to be single particles through SEM photos.

The recovered positive electrode active material was directly subjected to only primary milling by using a pin mill at 12,000 rpm without being washed so as to produce a recycled positive electrode active material. Annealing, secondary milling, post-washing and coating were not performed.

Comparative Example 5

Instead of a reusable active material, new (fresh) NCM-based lithium composite transition metal oxide (containing 61 mol% of Ni based on 100 mol% of all remaining metals except for Li, average particle diameter: 3.99 $\mu$m) was prepared. The new positive electrode active material was confirmed to be single particles through SEM photos.

[Experimental Example I: Content of fluorine (F)]

The fluorine contents in the recycled or new positive electrode active materials manufactured or prepared in Examples 1 to 3 and Comparative Examples 1 to 5 were measured by using an ICP analysis device, and the results are noted in the following Table 1. Here, a general ICP analysis device commonly used in laboratories may be used for measurement, but there is no deviation depending on the measuring device or method.

[Table 1]

| Examples | F(mg/kg) |
|---|---|
| Example 1 | 5815 |
| Example 2 | 6300 |
| Example 3 | 6000 |
| Comparative Example 1 | 6050 |
| Comparative Example 2 | 160 |
| Comparative Example 3 | 5540 |
| Comparative Example 4 | 7200 |

(continued)

| Examples | F(mg/kg) |
|---|---|
| Comparative Example 5 | < 10 |

As noted in the above Table 1, it can be found that the fluorine contents of the recycled positive electrode active materials of Examples 1 to 3 according to the present disclosure fall within a range of 5700 ppm to 6500 ppm.

In contrast, in the recycled positive electrode active material of Comparative Example 2, the fluorine content was reduced because washing was performed twice, but a large amount of wastewater was generated, and also there was a lot of lithium loss. In the recycled positive electrode active material of Comparative Example 3, the fluorine content was similar to that of Example 1. From this, it can be found that the surface-coating does not affect the fluorine content.

Also, the recycled positive electrode active material of Comparative Example 4, which was manufactured by performing only primary milling, had a significant increase in fluorine content compared to Example 1.

Also, the new positive electrode active material of Comparative Example 5 had a low fluorine content. In the recycled positive electrode active material containing secondary particles of Comparative Example 1, the fluorine content was similar to that of Examples.

[Experimental Example II: CHC cell evaluation]

For the recycled or new positive electrode active materials manufactured or prepared in Examples 1 to 3 and Comparative Examples 1 to 5, the electrochemical performance was measured through the following CHC cell evaluation, and the results are noted in Table 2 below.

* CHC cell evaluation: 97.5 wt% of the recycled positive electrode active material, 1.15 wt% of carbon black as a conductive material and 1.35 wt% of PVdF as a binder were weighed, and these were mixed with NMP to obtain a slurry. An aluminum foil was coated with this slurry to prepare a positive electrode, and then a cell (Coin Half Cell, CHC) was manufactured. Then, the electrochemical performance (charging capacity CH, discharging capacity DCH and charging/discharging efficiency Eff (%)) was evaluated with 3 to 4.45 V cut, and initial formation charging/discharging of 0.1C/0.1C, under the conditions that an electrolyte with a weight ratio of ethylene carbonate (EC): dimethyl carbonate (DMC): ethyl methyl carbonate (EMC) of 3:4:3 and other additives were included.

The charging/discharging efficiency was calculated by the following mathematical formula 1 and is noted in Table 2.

Charging/discharging efficiency (%) = [Discharging capacity (mAh/g) / Charging capacity (mAh/g)] * 100     [Mathematical formula 1]

[Table 2]

| CHC capacity | Charging Capacity (mAh/g) | Discharging Capacity (mAh/g) | Charging/Discharging Efficiency (%) |
|---|---|---|---|
| Example 1 | 217.0 | 197.0 | 90.8 |
| Example 2 | 216.3 | 196.2 | 90.7 |
| Example 3 | 216.7 | 196.4 | 90.6 |
| Comparative Example 1 | 222.4 | 201.3 | 89.7 |
| Comparative Example 2 | 216.9 | 195.3 | 90 |
| Comparative Example 3 | 213.6 | 189.3 | 88.6 |
| Comparative Example 4 | 209.7 | 177.8 | 84.8 |
| Comparative Example 5 | 219.1 | 197.4 | 90.1 |

As noted in the above Table 2, it can be found that the recycled positive electrode active material in Examples 1 to 3 according to the present disclosure is more excellent in charging capacity (CH), discharging capacity (DCH) and/or charging/discharging efficiency (Eff) than the recycled positive electrode active material or new positive electrode active material in Comparative Examples 1 to 5. In particular, it can be found that in Comparative Example 2 in which washing was performed instead of milling, the discharging efficiency and the charging/discharging efficiency were low compared to in Examples 1 to 3.

[Experimental Example III: XRD analysis]

Each of the recycled or new positive electrode active materials manufactured or prepared in Examples 1 to 3 and Comparative Examples 1 to 5 was subjected to an XRD analysis, and the a-axis lattice parameter, the c-axis lattice parameter, the cell volume, and the crystallite size were measured and are noted in the following Table 3.

* Lattice parameter and crystallite size were measured through an XRD analysis, specifically an XRD analysis using Cu K$\alpha$ X-rays. The lattice parameter was calculated by indexing data measured through XRD through Rietveld refinement, the cell volume was calculated by the product of the a-axis lattice parameter and the c-axis lattice parameter, and the crystallite size was calculated using the Scherrer equation for the XRD measurement data.

[Table 3]

| XRD | a-axis lattice parameter (Å) | c-axis lattice parameter (Å) | Cell volume (Å$^3$) | Crystallite size (nm) |
|---|---|---|---|---|
| Example 1 | 2.8768 | 14.253 | 102.148 | 134 |
| Example 2 | 2.8764 | 14.254 | 102.134 | 131 |
| Example 3 | 2.8765 | 14.251 | 102.116 | 133 |
| Comparative Example 1 | 2.8741 | 14.234 | 101.820 | 140 |
| Comparative Example 2 | 2.8766 | 14.252 | 102.132 | 129 |
| Comparative Example 3 | 2.8776 | 14.250 | 102.189 | 162 |
| Comparative Example 4 | 2.8796 | 14.256 | 102.369 | 122 |
| Comparative Example 5 | 2.8776 | 14.250 | 102.187 | 165 |

As noted in the above Table 3, it can be found that in the recycled positive electrode active material (Examples 1 to 3) according to the present disclosure, the a-axis lattice parameter, the c-axis lattice parameter, the cell volume, and the crystallite size are different from those in the new positive electrode active material (Comparative Example 5). Specifically, the a-axis lattice parameter and the cell volume are smaller and the c-axis lattice parameter and the crystallite size are larger. From this, it can be found that due to milling before and/or after annealing, the crystal structure, and the crystallite size in the recycled single-particle positive electrode active material according to the present disclosure are different from those in the new positive electrode active material.

Also, it can be found that the a-axis lattice parameter, the c-axis lattice parameter, the cell volume, and the crystallite size in the recycled positive electrode active materials of Examples 1 to 3 are different from those in the recycled positive electrode active materials of Comparative Examples 1 to 4.

[Experimental Example IV: Evaluation of high-temperature life characteristics]

For CHC cells manufactured as described above, from the recycled or new positive electrode active materials manufactured or prepared in Examples 1 to 3, and Comparative Examples 1 to 5, the capacity retention rate was measured as follows, and the results are noted in the following FIG. 2.

* Evaluation of high-temperature life characteristics: at 45 °C, under the following conditions, for each cell, 30 cycles of charging/discharging were carried out. For each cycle, the capacity retention rate was calculated by the following mathematical formula 2 and is illustrated in the following FIG. 2.

Charging: 0.33 C, CC/CV, 4.5 V, 0.05 C cut-off
Discharging: 0.33 C, CC, 3.0 V, 0.05 C cut-off

$$\text{Capacity retention rate (\%) = (discharging capacity after N cycles/ discharging capacity after 1 cycle) * 100} \qquad \text{[Mathematical formula 2]}$$

The following FIG. 2 is a graph illustrating the capacity retention rate according to the number of cycles (Cycle No.). This illustrates the evaluation results of life characteristics of the recycled single-particle positive electrode active materials (Examples 1 to 3) according to the present disclosure, in comparison to each of the recycled secondary-particle positive electrode active material (Comparative Example 1), the recycled positive electrode active material (Comparative Example 2) obtained by carrying out washing without milling, the recycled positive electrode active material (Comparative Example 3) obtained by carrying out heat treatment without addition of boric acid in the surface-coating step, the recycled positive electrode active material (Comparative Example 4) obtained by carrying out only the primary milling step, and the new positive electrode active material (Comparative Example 5).

Referring to this, it can be found that the recycled positive electrode active materials (Examples 1 to 3) according to the present disclosure are excellent in the capacity retention rate as compared to the recycled positive electrode active materials of Comparative Examples 1 to 4 and also the new positive electrode active material (Comparative Example 5).

In particular, it can be found that in Comparative Example 1 including the secondary-particle positive electrode active material, although milling was carried out both before and after annealing, the capacity retention rate was very reduced.

[Description of Symbols]

    10: CURRENT COLLECTOR
    20: ACTIVE MATERIAL LAYER
    30: POSITIVE ELECTORDE SHEET
    40: POSITIVE ELECTRODE PLATE
    50: POSITIVE ELECTRODE SCRAP

**Claims**

1. A positive electrode active material comprising at least one type selected from a lithium nickel oxide (LNO)-based positive electrode active material, a nickel·cobalt·manganese (NCM)-based positive electrode active material, a nickel·cobalt·aluminum (NCA)-based positive electrode active material and a nickel·cobalt·manganese·aluminum (NCMA)-based positive electrode active material,
   wherein:

   the positive electrode active material contains single particles,
   a content of F is 5,700 mg/kg to 6,500 mg/kg, and/or
   an a-axis lattice parameter of the positive electrode active material measured by an X-ray diffraction (XRD) analysis is 2.8753 Å to 2.8772 Å, a c-axis lattice parameter of the positive electrode active material is 14.243 Å to 14.255 Å, a cell volume of the positive electrode active material is 101.968 Å$^3$ to 102.168 Å$^3$ and a crystallite size of the positive electrode active material is greater than 130 nm and equal to or less than 136 nm.

2. The positive electrode active material according to claim 1, wherein the positive electrode active material contains 40 mol% or more of Ni based on 100 mol% of all remaining metals excluding Li.

3. The positive electrode active material according to claim 1, wherein the positive electrode active material has a surface coated with a coating agent containing metal or carbon.

4. The positive electrode active material according to claim 1, wherein the positive electrode active material is a recycled positive electrode active material.

5. A positive electrode active material recycling method comprising:

   (a) performing heat treatment of a waste positive electrode having a positive electrode active material layer formed on a current collector at 300 °C to 650 °C so as to thermally decompose a binder and a conductive material in the positive electrode active material layer and to recover a single-particle-containing positive electrode active material in the positive electrode active material layer;
(b) adding a lithium precursor to the recovered positive electrode active material and annealing the positive electrode active material at 400 °C to 1,000 °C;
(c) washing the annealed positive electrode active material with a washing solution; and
(d) performing surface-coating of the washed positive electrode active material,

wherein the positive electrode active material recycling method includes:

performing milling before the recovered positive electrode active material is annealed in (b); and/or
performing the milling before the annealed positive electrode active material is washed in (c).

6.  A positive electrode active material recycling method comprising:

(a) performing heat treatment of a waste positive electrode having a mid-nickel positive electrode active material layer formed on a current collector at 300 °C to 650 °C so as to thermally decompose a binder and a conductive material in the positive electrode active material layer and to recover a single-particle-containing positive electrode active material in the positive electrode active material layer;
(b) adding a lithium precursor to the recovered positive electrode active material and annealing the positive electrode active material at 400 °C to 1,000 °C;
(c) washing the annealed positive electrode active material with a washing solution; and
(d) performing surface-coating of the washed positive electrode active material,

wherein the positive electrode active material recycling method includes:

performing milling before the recovered positive electrode active material is annealed in (b); and/or
performing the milling before the annealed positive electrode active material is washed in (c).

7.  The positive electrode active material recycling method according to claim 5 or 6, wherein the positive electrode active material layer is at least one type selected from a lithium nickel oxide (LNO)-based positive electrode active material, a nickel·cobalt·manganese (NCM)-based positive electrode active material, a nickel·cobalt·aluminum (NCA)-based positive electrode active material, and a nickel·cobalt·manganese·aluminum (NCMA)-based positive electrode active material, and contains 40 mol% or more of Ni based on 100 mol% of all remaining metals excluding Li.

8.  The positive electrode active material recycling method according to claim 5 or 6, wherein the milling is carried out by using a centrifugal mill, a jet mill, or a pin mill.

9.  The positive electrode active material recycling method according to claim 5 or 6, wherein the milling is carried out at 6,000 rpm to 18,000 rpm.

10. The positive electrode active material recycling method according to claim 5 or 6, wherein the lithium precursor contains at least one of $LiOH$, $Li_2CO_3$, $LiNO_3$, and $Li_2O$.

11. The positive electrode active material recycling method according to claim 5 or 6, wherein in (b), the lithium precursor is added at least in an amount reduced from a molar ratio of lithium in the positive electrode active material in (a) on the basis of the amount of lithium in the recovered positive electrode active material.

12. The positive electrode active material recycling method according to claim 5 or 6, wherein in the washing in (c), a weight ratio of the annealed positive electrode active material or the milled positive electrode active material to the washing solution is 1:0.5 to 1:5.5.

13. The positive electrode active material recycling method according to claim 5 or 6, wherein the washing in (c) includes mixing the annealed positive electrode active material or the milled positive electrode active material with the washing solution and performing filtration; and
drying a solid positive electrode active material obtained after the filtration.

14. The positive electrode active material recycling method according to claim 5 or 6, wherein in the surface-coating of (d), a surface is coated with at least one type of a metal, an organic metal, and a carbon component in a solid or liquid manner and then heat treatment is performed at 100 °C to 1,200 °C.

## FIG. 1

## FIG. 2

## FIG. 3

```
S10 ──○  ┌─────────────────────┐
         │   WASTE POSITIVE    │
         │     ELECTRODE       │
         └─────────────────────┘
                    │
                    ▼
S20 ──○  ┌─────────────────────┐
         │        CRUSH        │
         └─────────────────────┘
                    │
                    ▼
S30 ──○  ┌─────────────────────┐
         │    HEAT TREATMENT   │
         └─────────────────────┘
                    │
                    ▼
S40 ──○  ┌─────────────────────┐
         │   PRIMARY MILLING   │
         └─────────────────────┘
                    │
                    ▼
S50 ──○  ┌─────────────────────┐
         │      ANNEALING      │
         └─────────────────────┘
                    │
                    ▼
S60 ──○  ┌─────────────────────┐
         │  SECONDARY MILLING  │
         └─────────────────────┘
                    │
                    ▼
S70 ──○  ┌─────────────────────┐
         │       WASHING       │
         └─────────────────────┘
                    │
                    ▼
S80 ──○  ┌─────────────────────┐
         │   SURFACE COATING   │
         └─────────────────────┘
                    │
                    ▼
        RECYCLED POSITIVE ELECTRODE
             ACTIVE MATERIAL
```

## INTERNATIONAL SEARCH REPORT

| International application No. |
| --- |
| **PCT/KR2025/000845** |

| A. | CLASSIFICATION OF SUBJECT MATTER |
| --- | --- |

**H01M 4/36**(2006.01)i; **H01M 4/525**(2010.01)i; **H01M 4/505**(2010.01)i; **H01M 10/54**(2006.01)i; **B09B 3/40**(2022.01)i; **B09B 3/35**(2022.01)i; **H01M 4/02**(2006.01)i; **B09B 101/16**(2022.01)i

According to International Patent Classification (IPC) or to both national classification and IPC

| B. | FIELDS SEARCHED |
| --- | --- |

Minimum documentation searched (classification system followed by classification symbols)

H01M 4/36(2006.01); B09B 101/16(2022.01); B09B 3/35(2022.01); H01M 10/052(2010.01); H01M 4/50(2010.01); H01M 4/52(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질 (cathode active material), 재생 방법 (recycling process), 단입자 (single particle), 어닐링 (annealing), 표면코팅 (surface coating), 니켈코발트망간 양극재 (NCM cathode)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2024-0006437 A (LG ENERGY SOLUTION, LTD.) 15 January 2024 (2024-01-15) See abstract; paragraphs [0067], [0175], [0260] and [0323]-[0328]; table 2; and claims 1, 2, 4-6 and 13-19. | 1-4 |
| Y | | 5-14 |
| Y | KR 10-2024-0024110 A (DOWA ECO SYSTEM CO., LTD. et al.) 23 February 2024 (2024-02-23) See abstract; and paragraphs [0163]-[0168]. | 5-14 |
| A | KR 10-2017-0033787 A (ECOPRO BM CO., LTD.) 27 March 2017 (2017-03-27) See abstract; and claims 1-14. | 1-14 |
| A | KR 10-2024-0006436 A (LG ENERGY SOLUTION, LTD.) 15 January 2024 (2024-01-15) See abstract; and claims 1-19. | 1-14 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 April 2025** | **15 April 2025** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2025/000845**

**C.    DOCUMENTS CONSIDERED TO BE RELEVANT**

| Category* | Citation of document, with indication, where appropriate, of the relevant passages | Relevant to claim No. |
|---|---|---|
| A | JP 2008-293988 A (GS YUASA CORP.) 04 December 2008 (2008-12-04)<br>See abstract; and claims 1-25. | 1-14 |

Form PCT/ISA/210 (second sheet) (July 2022)

**INTERNATIONAL SEARCH REPORT**
**Information on patent family members**

International application No.

**PCT/KR2025/000845**

| Patent document cited in search report | | | Publication date (day/month/year) | Patent family member(s) | | | Publication date (day/month/year) |
|---|---|---|---|---|---|---|---|
| KR | 10-2024-0006437 | A | 15 January 2024 | CA | 3241830 | A1 | 11 January 2024 |
| | | | | CN | 118266102 | A | 28 June 2024 |
| | | | | EP | 4428955 | A1 | 11 September 2024 |
| | | | | JP | 2024-542708 | A | 15 November 2024 |
| | | | | KR | 10-2024-0095127 | A | 25 June 2024 |
| | | | | KR | 10-2675713 | B1 | 19 June 2024 |
| | | | | US | 2025-0030076 | A1 | 23 January 2025 |
| | | | | WO | 2024-010263 | A1 | 11 January 2024 |
| KR | 10-2024-0024110 | A | 23 February 2024 | CN | 117546337 | A | 09 February 2024 |
| | | | | EP | 4362169 | A1 | 01 May 2024 |
| | | | | JP | 2023-004914 | A | 17 January 2023 |
| | | | | JP | 7176707 | B1 | 22 November 2022 |
| | | | | TW | 202320389 | A | 16 May 2023 |
| | | | | US | 2024-0387892 | A1 | 21 November 2024 |
| | | | | WO | 2022-270393 | A1 | 29 December 2022 |
| KR | 10-2017-0033787 | A | 27 March 2017 | KR | 10-1929961 | B1 | 18 December 2018 |
| KR | 10-2024-0006436 | A | 15 January 2024 | CN | 118216018 | A | 18 June 2024 |
| | | | | EP | 4421915 | A1 | 28 August 2024 |
| | | | | US | 2025-0033993 | A1 | 30 January 2025 |
| | | | | WO | 2024-010260 | A1 | 11 January 2024 |
| JP | 2008-293988 | A | 04 December 2008 | DE | 60237441 | D1 | 07 October 2010 |
| | | | | EP | 1391950 | A1 | 25 February 2004 |
| | | | | EP | 1391950 | B1 | 25 August 2010 |
| | | | | EP | 2144314 | A2 | 13 January 2010 |
| | | | | EP | 2144314 | A3 | 28 July 2010 |
| | | | | EP | 2144314 | B1 | 28 January 2015 |
| | | | | JP | 4556377 | B2 | 06 October 2010 |
| | | | | TW | 541745 | A | 11 July 2003 |
| | | | | TW | 541745 | B | 11 July 2003 |
| | | | | WO | 02-086993 | A1 | 31 October 2002 |

Form PCT/ISA/210 (patent family annex) (July 2022)

**REFERENCES CITED IN THE DESCRIPTION**

**Patent documents cited in the description**

- KR 1020240029795

- KR 1020250004743